# EUROPÄISCHE PATENTSCHRIFT

(11) **EP 1 003 984 B1**
(45) Veröffentlichungstag und Bekanntmachung des Hinweises auf die Patenterteilung: **11.07.2001**
(21) Anmeldenummer: 98929304.8
(22) Anmeldetag: 13.05.1998
(51) Int. Cl.: F16H 29/18, F16D 41/07

(54) **RICHTUNGSGESCHALTETE KUPPLUNG**
DIRECTIONAL CLUTCH
COUPLAGE A COMMUTATION DIRECTIONNELLE

(30) Priorität: 13.08.1997 DE 19734962
(43) Veröffentlichungstag der Anmeldung: 31.05.2000
(73) Patentinhaber: SATELLITE GEAR SYSTEM LTD., Dublin 2 (IE)
(72) Erfinder: CHILMAN, John, Alfred, Painswick Glos. (GB)
(74) Vertreter: Vomberg, Friedhelm, Dipl.-Phys.
(86) Internationale Anmeldenummer: EP9802809
(87) Internationale Veröffentlichungsnummer: WO9909336

(56) Entgegenhaltungen:
- EP-A- 0 303 531
- EP-A- 0 336 033
- CH-A- 359 583
- GB-A- 469 758
- GB-A- 821 857
- GB-A- 946 682
- US-A- 4 892 506

## Beschreibung

Die Erfindung betrifft eine richtungsgeschaltete Kupplung (Freilaufkupplung) mit einem Antriebs- und einem Abtriebselement, zwischen denen Klemmelemente angeordnet sind, die selbst oder die über mit diesen verbundenen Körpern sowohl in der Freilaufstellung als auch in der drehmomentübertragenden Stellung in bezug auf die Drehrichtung des Abtriebselementes mit diesem drehunbeweglich verbunden sind und die in der Freilaufstellung in einer ringförmigen Führung des Antriebselementes bewegt und in der drehmomentübertragenden Stellung in dieser Führung gesperrt werden, wobei das Abtriebselement radiale Führungen aufweist, in denen jeweils ein vorstehender Klemmkörperzapfen oder ein mit dem Klemmkörper verbundenes Element radial führbar angeordnet ist und daß das Abtriebselement exzentrisch zum Antriebselement verstellbar ist, wobei die Klemmelemente bei exzentrischer Einstellung einen drehmomentübertragenden Lastweg und einen lastfreien Weg zyklisch durchlaufen und beim Übergang vom lastfreien Weg zum Lastbogenweg durch Kraft- und/oder Formschlußeingriff mit dem Antriebselement das anliegende Drehmoment übertragen und wobei die Klemmelemente so geführt und ausgebildet sind, daß nur ein zu ihrem Schwenken beim Übergang vom lastfreien Weg zum drehmomentübertragenden Weg benötigter Freiheitsgrad verbleibt. Eine solche Kupplung ist beispielsweise aus der EP 0 336 033 A1 bekannt.

Die Erfindung betrifft ferner eine Kupplung nach dem Oberbegriff des Anspruches 9.

Bei nach dem Stand der Technik bekannten Freilauf- oder Überholkupplungen erfolgt die Drehmomentübertragung durch Sperrklinken, Klemmkörper oder Kugeln, die zwischen dem Antriebs- und dem Abtriebselement eingebaut werden. Beispielsweise werden bei einer Fahrrad-Freilaufnabe Kugeln verwendet; dreht sich die Antriebswelle schneller als das Gehäuse, werden die Kugeln durch die Form der Nuten in der Welle nach außen gedrängt und klemmen sich zwischen Antriebs- und Abtriebswelle fest, wodurch das Gehäuse mitgenommen wird. Dreht sich hingegen das Gehäuse schneller als die Antriebswelle, wandern die Kugeln in den Nuten nach innen, wodurch die Kraftübertragung unterbrochen wird.

Einheitlich ist bei den genannten Kupplungen stets das Kupplungselement in radialer Richtung zwischen dem Antriebs- und dem Abtriebselement angeordnet, wo es entweder in gekuppeltem Zustand die gegenseitige Relativbewegung zwischen dem Antriebs- und dem Abtriebselement sperrt oder im Freilaufzustand eine Relativbewegung des Antriebselementes zu dem Abtriebselement zuläßt.

Um die Freilaufkupplung trotz Wahrung der geforderten Funktionen einfacher und billiger herstellbar zu gestalten, wird in der DE-B 24 52 650 eine Freilaufkupplung mit zwischen je einem inneren und einem äußeren Klemmring angeordneten und im Freilauf gegen dem überholten Klemmring berührungsfrei werdenden unrunden Klemmkörpern vorgeschlagen, bei der die Klemmkörper jeweils über eine zur Kupplungsachse parallele und zumindest teilzylindrische Lagerfläche an mit dem im Freilauf überholenden Klemmring umlaufenden Ringen gehalten sind. Die Kupplung weist einen inneren, auf einer Welle drehfest festgelegten Klemmring und einen auf einer weiteren Welle konzentrisch zum Klemmring gelagerten äußeren Klemmring auf. In dem zwischen den beiden Klemmringen gebildeten Ringspalt sind unrunde Klemmkörper angeordnet, von denen jeder eine in dessen Einbaulage parallel zur Kupplungsachse verlaufende Durchbohrung aufweist, über welche er an einem gehärteten Lagerbolzen gelagert ist. Die beiderseits des Klemmkörpers vorstehenden Enden des Lagerbolzens sind in je einer Aufnahmebohrung eines inneren Ringflansches des äußeren Klemmringes mit einem Preßsitz festgelegt. Die aus der in einem Flansch eingebrachten Bohrung und dem Lagerbolzen bestehende Lagerfläche des Klemmkörpers bildet zugleich die Klemmfläche gegenüber dem äußeren Klemmring.

Aus der WO 95/03503 sind auch stufenlos oder quasistufenlos verstellbare formschlüssige Satellitengetriebe mit einem Antriebs- und einem Abtriebselement bekannt, die mehrere einzelne Räder aufweisen, die gemeinsam ein Satellitenrad darstellen, das mit einem Zentralrad in einer permanenten Formschlußverbindung steht. Das Verhältnis der wirksamen Radien des Satellitenrades und des Zentralrades und die gegenseitige exzentrische Lage des Satellitenrades und des Zentralrades zueinander, die durch geeignete Mittel variiert werden kann, bestimmt das Drehzahlverhältnis zwischen dem Antriebs- und dem Abtriebselement. Die das Satellitenrad bildenden Räder durchlaufen bei exzentrischer Lage zu dem Zentralrad einen drehmomentübertragenden Lastweg und einen lastfreien Weg zyklisch, wobei die Räder einerseits um die Satellitenradachse und andererseits über eine richtungsgeschaltete Kupplung nur in einer Richtung um ihre eigene Achse drehbar angeordnet sind. Beim Übergang vom lastfreien Weg zum Lastbogenweg übertragen die Räder durch den Formschlußeingriff die eigene Rotation blockierend das anliegende Drehmoment. Eine Ungleichförmigkeit der Drehmomentübertragung wird durch Variation der durch den Lastbogen bestimmten wirksamen Radien und/oder der wirksamen Tangentialkomponenten durch eine zyklische Regelung zumindest teilweise kompensiert.

Es ist Aufgabe der vorliegenden Erfindung, eine neue richtungsgeschaltete Kupplung zu schaffen, die einfach aufgebaut ist und die die Übertragung von hohen Drehmomenten zuläßt.

Diese Aufgabe wird durch die Kupplung nach Anspruch 1 oder Anspruch 9 gelöst.

Die beiden Kupplungen unterscheiden sich dadurch, daß die Ausführungsform nach Anspruch 1 eine Änderung der Übersetzung ermöglicht, wodurch diese Kupplung als Teil eines stufenlosen oder quasi stufenlosen Getriebes verwendbar ist, während die Ausführungsform nach Anspruch 9 mangels der exzentrischen Verstellbarkeit des Antriebselementes relativ zum Abtriebselement bei entsprechend einfacherem Aufbau nur ein konstantes Übersetzungsverhältnis zwischen dem Antriebs- und dem Abtriebselement liefert. Grundsätzlich sind jedoch für gleiche Teile der beiden Ausführungsformen dieselben Vorteile in gleichem Maße bei beiden Lösungen nutzbar.

Die Lösung durch die Kupplung nach Anspruch 1 ist dadurch gekennzeichnet, daß die Klemmelemente aus einem ein- oder mehrteiligen Grundkörper und aus einem ein- oder mehrteiligen Kontaktkörper bestehen, der in der drehmomentübertragenden Stellung in der Führung des Antriebselementes sperrend anliegt und daß vorstehende Klemmkörperzapfen oder ein mit dem Klemmkörper verbundenes Element zweischnittig, d.h. jeweils zwei axial versetzte Teile aufweisend, in radialen Führungen des Abtriebselementes angeordnet ist.

Nach der vorliegenden Erfindung wird das Klemmelement so geführt bzw. ist so ausgebildet, daß nur ein zu seinem Schwenken beim Übergang von dem lastfreien Weg zum drehmomentübertragenden Weg benötigter Freiheitsgrad verbleibt. Durch diese zweischnittige Krafteinleitung bzw. Kraftausleitung kann es bei der Ausleitung der Drehkräfte nicht zum Verkanten der Klemmelemente kommen, da andere Bewegungen als die gewünschten Kippbewegungen nicht möglich sind. Sowohl die Kippachse des Klemmelementes als auch die Drehachsen des Antriebselementes und des Abtriebselementes liegen in einer Richtung. In einer konkreten Lösung ist der vorstehende Klemmkörperzapfen oder ein mit dem Klemmkörper verbundenes Element zweischnittig in radialen Führungen des Abtriebselementes angeordnet, wobei der Klemmkörper einen vertikal zur Ringnutebene stehenden Zapfen aufweist, an dessen dem Klemmkörper abgewandten Ende der Klemmkörperzapfen mit einer parallel zur Ringnut liegenden Längsachse angeordnet ist, dessen (überstehenden) Enden in jeweiligen radialen Führungen eines zweiteilig ausgebildeten Abtriebselementes angeordnet sind, wobei die beiden scheibenförmig oder als Welle mit radial abstehenden Armen ausgebildeten Teile des Abtriebselementes beidseitig des Antriebselementes angeordnet und miteinander verbunden sind.

Die beanspruchte Kupplung umfaßt auch solche Ausführungsformen, bei denen das Antriebselement die genannte radiale Führung und das Abtriebselement eine ringförmige Führung aufweist. Bei einer zweistufigen Ausführungsform einer Kupplung weist jeweils eine Stufe die Ringnut oder den Ringkörper und die darauffolgende Stufe die Radialnutscheibe auf, damit die stabile Phasenlage zur Verminderung der Ungleichförmigkeit erreicht werden kann.

Bei dieser Lösung dienen die Klemmelemente erfindungsgemäß unmittelbar sowohl als Freilauf- als auch als Übertragungselement, ohne daß weitere Bauteile, wie Kugel- oder Rollenkäfige, Klemmnuten oder sonstige fliehkraftabhängig arbeitenden Kupplungsteile erforderlich sind. Die Sperrwirkung der Klemmelemente wird in nur einem Bauteil ausgelöst, nämlich der als Ringnut oder Ringkörper ausgebildeten Führung des Antriebselementes, wodurch eine getrennte Lagerung bzw. Führung in dem Antriebselement und dem Abtriebselement vermieden wird. Die bisher notwendige Ausbildung eines Innen- und eines Außenringes, wozwischen die Klemmelemente angeordnet sind, kann entfallen. Im einfachsten Fall sind die Klemmelemente selbst bzw. ihre aus der Ringnut des Antriebselementes ragenden Teile direkt mit dem Abtriebselement drehstarr verbunden. Die Erfindung erfaßt jedoch auch solche Ausführungsformen, bei denen mit den Klemmelementen in der Führung bzw. Ringnut des Antriebselementes mitbewegte Körper, die mit den Klemmelementen verbunden sind, als drehmomentübertragendes Element mit dem Abtriebselement drehstarr verbunden sind. Der Erfindungsgedanke erfaßt somit alle Anordnungen, bei denen die Klemmkräfte nicht - wie bei nach dem Stand der Technik bekannten Kupplungen - über getrennte Lager und Wellen übertragen werden müssen, wodurch sich der Vorteil ergibt, daß nur die wesentlich kleineren Tangentialkräfte zwischen den Klemmelementen und den Führungen bei der Drehmomentübertragung wirksam werden.

Um mit der Kupplung nicht nur Drehzahlübertragungen im Verhältnis 1 : 1 möglich zu machen, sondern auch andere Übersetzungsverhältnisse, ist die Kupplung als Getriebe ausgebildet, wobei das Abtriebselement radiale Führungen aufweist, in denen jeweils ein vorstehender Klemmkörperzapfen oder ein mit dem Klemmkörper verbundenes Element radial führbar angeordnet ist und das Abtriebselement exzentrisch zum Antriebselement verstellbar ist, wobei die Klemmelemente bei exzentrischer Einstellung einen drehmomentübertragenden Lastweg und einen lastfreien Weg in der beschriebenen Art zyklisch durchlaufen. Auf diese Weise ist eine stufenlose Drehzahlregelung bei hoher Betriebssicherheit und langer Lebensdauer zu erreichen. Drehzahlschwankungen, wie sie bei mit Keilriemen arbeitenden Kupplungen infolge eines unzureichenden Reibschlusses auftreten können, sind ausgeschlossen.

Weiterbildungen der Erfindung sind in den Unteransprüchen 2 bis 8 beschrieben.

So kann das Abtriebselement eine Scheibe mit im wesentlichen radial verlaufenden Nuten als radialen Führungen sein oder alternativ hierzu als Abtriebselement eine Art Zahnrad darstellen, etwa in Form einer Welle mit radial abstehenden Armen, deren Axialflächen als radiale Führungen ausgebildet sind, wobei die jeweiligen vorstehenden Klemmkörperzapfen oder die mit den Klemmkörpern verbundenen Elemente beim Durchlaufen des Lastbogenweges drehmomentübertragend auf die Arme wirken und beim Durchlaufen des lastfreien Weges über Mitnehmerverbindungen, vorzugsweise einen Draht oder einen elastischen Ring, vom nächstliegenden Arm der Welle mitgenommen werden. In dieser Alternativlösung wirken somit die Zwischenräume zwischen den Armen als Führung des Abtriebselementes für die genannten Zapfen. Die Klemmelemente selbst werden in Ringnuten des Antriebselementes um eine Drehachse bewegt, die parallel oder vertikal zu ihrer Schwenkachse liegt, um die die Klemmelemente beim Übergang vom drehmomentfreien zum drehmomentübertragenden Weg kippbar sind. Die Drehmomentübertragung kann durch einen einseitig oder zweiseitig abstehenden Zapfen bewirkt werden, der Teil des Klemmelementes ist und der in eine Ausnehmung (Führung) des Abtriebselementes eingreift. Alternativ hierzu ist es auch möglich, daß das Klemmelement in der Ringnut des Antriebskörpers von einer Gabel jeweils seitlich umfaßt wird und hierdurch mit dem Klemmelement in der Ringnut mitgeführt wird, wobei die Gabel an der dem Klemmelement abgewandten Seite einen Zapfen aufweist, der in entsprechender Weise, wie vorbeschrieben, in eine Ausnehmung des Abtriebselementes eingreift.

Wie bereits vorstehend angedeutet, kann die ringförmige Führung des Antriebselementes (oder Abtriebselementes) aus einer Ringnut bestehen, in der die Klemmelemente bewegbar oder sperrbar angeordnet sind, oder durch einen Ringkörper gebildet werden, der von Klemmelementen gleitend oder abrollend umfaßt bzw. durch Verschwenken reibschlüssig umgriffen wird.

Die Nuten des scheibenförmig ausgebildeten Abtriebselementes als Radialführungen sind vorzugsweise gekrümmt ausgebildet, um eine möglichst große Gleichförmigkeit der Drehmomentübertragung bei exzentrischer Verstellung zu erreichen. Der Klemmkörperzapfen kann im Querschnitt rund oder auch unrund ausgeführt sein.

Alternativ zu der vorbeschriebenen Ausführungsform und insbesondere bei Getrieben, bei denen aus Platzgründen ein scheibenförmiges Abtriebselement, das relativ zum Antriebselement exzentrisch verstellbar ist, ungeeignet bzw. wegen der großvolumigen Bauweise störend erscheint, ist es möglich, in dem exzentrisch verstellbaren Abtriebselement einen radial beweglichen Schlitten vorzusehen, der mit dem Klemmkörper oder einem mit diesem verbundenen Körper drehstarr verbunden ist. In diesem Fall dient der radial bewegliche Schlitten als Exzenter, der je nach eingestelltem Radialabstand zur Antriebswellenachse eine veränderte Drehzahl des Abtriebselementes einstellen läßt.

Wie prinzipiell anhand eines Satellitengetriebes, das mit konventionellen, nach dem Stand der Technik bekannten Freilaufkupplungen bestückt ist, beschrieben ist, ist die vorliegende Getriebe-Kupplung nach einer weiteren Ausgestaltung der Erfindung derart ausgebildet, daß die Ungleichförmigkeit der Drehmomentübertragung durch Variation der durch den Lastbogen bestimmten wirksamen Radien und/oder der wirksamen Tangentialkomponenten durch eine zyklische Regelung zumindest teilweise kompensiert wird. Die Klemmelemente durchlaufen in der Ringnut des Antriebselementes bei relativer exzentrischer Verstellung des Abtriebselementes (bzw. des Schlittens) sukzessive einen drehmomentübertragenden Lastweg und einen lastfreien Weg, wobei am Lastübergabepunkt Drehmomentensprünge oder sonstige Ungleichförmigkeiten abgefangen werden können. Eine erste Variante ist bereits vorstehend durch gekrümmt ausgebildete Radialnuten des scheibenförmigen Abtriebselementes beschrieben worden. Gleichermaßen ist es möglich, die Ungleichförmigkeit der Freilaufverriegelung durch elastische Bauelemente abzufangen oder - bei der Verwendung von Sperrklinkenfreiläufen - eine Regelung der Übersetzung dergestalt vorzunehmen, daß nicht in unendlich kleinen Stufen verstellt wird, sondern in Sprüngen jeweils solche Übersetzungsverhältnisse gewählt werden, bei denen die Klinken- bzw. Rampenbreite des Sperrklinkenfreilaufes derart abgestimmt ist, daß kein Lastsprung erzeugt wird.

In einer konkreten Ausführungsform der Erfindung wird die Drehzahlübersetzung zwischen dem Antriebselement und dem Abtriebselement in zwei oder mehr Stufen bewirkt. Hierbei sind vorzugsweise die jeweils zwischen zwei Stufen miteinander verbundenen Übertragungsmittel, die insbesondere als Scheiben ausgebildet sind, über ein elastisches Verbindungsglied aneinandergekoppelt. Als Kopplungselemente können Kniegelenkhebel, die eine zyklisch gesteuerte oder gefederte Knickbewegung ausführen, verwendet werden. Die betreffenden Kniegelenkhebel lassen sich im Lastbogenweg radial gestützt über Kulissen, Nocken und Mehrgelenkketten oder sonstige Gestänge führen. Die Ungleichmäßigkeit der Drehmomentübertragung bzw. des Übersetzungsverhältnisses kann auch durch eine kraftabhängige Federung und/oder durch Ausgleichsmassen auf hydraulischem, pneumatischem oder mechanischem Wege erfolgen. Bei der Drehzahlübersetzung in zwei oder mehreren Stufen wird vorzugsweise die Phasenlage der Stufen so gewählt, daß sich die Ungleichförmigkeiten der Stufen im wesentlichen gegenseitig kompensieren oder die Stufen phasenweise entkoppelt werden. Bei einem zweistufigen Getriebe können die jeweiligen Lastbogenwege so gewählt sei, daß sie um 180° phasenversetzt liegen. Vorzugsweise ist die Zahl der Klemmelemente in jeder Getriebestufe bei geradzahligen Stufen gleich groß, bei ungeradzahligen Getriebestufen wird der Phasenversatz vorzugsweise durch eine mittlere Sternscheibe aufgehoben.

Es ist auch möglich, bei mehrstufigen Getrieben eine Kopplung mit in Drehrichtung entgegengesetzten und/oder umschaltbaren Freiläufen oder über eine Umkehrwelle oder parallele Welle ansteuerbaren Wellen zu wählen.

Schließlich kann das Antriebselement so geteilt werden, daß eine gegenläufig rotierende Welle und eine über ein Satellitengetriebe regelbare Welle in ein Umlaufgetriebe geführt wird, so daß sich die abtreibende (dritte) Welle des Umlaufgetriebes durch Addition der antreibenden Welle stufenlos mit erweitertem Regelbereich regeln läßt.

Die Klemmelemente, die vorzugsweise in Ringnuten um eine Drehachse bewegt werden, kippen beim Übergang von der drehmomentfreien zur drehmomentübertragenden Stellung in eine Stellung bei der sie reibschlüssig in der genannten Ringnut anliegen. Hierbei vollziehen sie in bezug auf die Ringnut eine Gleitbewegung, deren (Gleit-)Weg von dem Weg abhängt, den die Klemmkörper von der ersten Linien- oder Punktberührung mit der Ringnutwand bis hin zu einer kleinflächigen Anlage der Klemmelemente an der Ringnut durchlaufen. Dies folgt aus der Hertzschen Theorie, nach der sich bei einem Aneinanderdrücken von im wesentlichen runden Körpern an eine Ebene bzw. eine Fläche mit größerem Radius Abplattungen ergeben. Zwischen dem ersten Berühren eines Klemmkörpers und der Ringnut und der Verriegelungsstellung findet demgemäß eine Relativ-Dreh-Bewegung des Klemmelementes (bzw. der hiermit verbundenen Abtriebselementes) und dem Antriebselement statt. Der Gleitweg ist zwar bei entsprechender Wahl eines Materials mit extrem geringer Verformung minimierbar, jedoch wegen der hohen wirksamen Kräfte und der hohen Schaltfrequenz im Betrieb als stufenloses Getriebe dennoch von Einfluß auf den Wirkungsgrad und den Verschleiß. Um den Verschleiß der Klemmelemente zu minimieren und den Wirkungsgrad der Kupplung zu erhöhen, bestehen die Klemmelemente aus einem ein- oder mehrteiligen Grundkörper und aus einem ein- oder mehrteiligen Kontaktkörper, der in der drehmomentübertragenden Stellung in der Führung des Antriebselementes sperrend anliegt. Durch die Maßnahme, den einstückigen, relativ großen Klemmkörper durch ein mehrteiliges Klemmelement zu ersetzen, kann insbesondere der zuvor beschriebene Gleitweg und damit der abtriebsbedingte Klemmkörperverschleiß minimiert werden. Die Verringerung des Gleitweges erhöht zudem den Wirkungsgrad der Kupplung.

Nach einer weiteren Ausgestaltungsvariante besteht der Kontaktkörper aus einer oder mehreren Rollen, die beim Verriegeln und/oder beim Überholen eine Wälzbewegung in der Führung ausführen. Die betreffenden Rollen (Kontaktkörper) werden im Grundkörper geführt und laufen im Überholbetrieb auf den Klemmflächen der Führung bzw. der Ringnut als Wälzkörper, wodurch sie einen geringen Schleppwiderstand erzeugen. Der Übergang vom drehmomentfreien zum drehmomentübertragenden Weg, der zwar nach wie vor mit einer Materialverformung (Abflachung der sperrend anliegenden Flächen) verbunden ist, wird hingegen unkritisch, da hierbei der Roll- oder Wälzvorgang mit negativer Beschleunigung bis zum relativen Stillstand gegenüber der Führung fortgesetzt wird. Der zwangsläufige Rollvorgang sorgt zudem dafür, daß die jeweils zur sperrenden Anlage kommenden Flächenbereiche wechseln, wodurch die Standfestigkeit und Sicherheit gegen die Bildung von Verschleißspuren (sogenannten Pittings) erheblich zunimmt.

Die Anfederung in eine Kontaktlage, die zu einer schaltgenauen Verriegelung ohne Totweg notwendig ist, erfolgt vorzugsweise durch mindestens eine Feder, die mittelbar oder unmittelbar auf den Kontaktkörper einwirkt und durch die die Anlage der Kontaktkörper an den Nutwandungen bewirkt wird.

Vorzugsweise wird die Feder oder hiermit zur Verriegelung verbundene Elemente, nämlich Rollen oder Kugeln auf Flächen einer weiteren Ringnut abgestützt, die im Boden der genannten Ringnut angeordnet ist. In dieser Ringnut kann ein Zapfen oder eine Rolle mit umlaufen, die über eine hiermit verbundene Feder den Kontaktkörper anlegt. Eine solche Ausgestaltung ermöglicht vorteilhafterweise die Ausbildung von besonders schlanken Klemmelementen (Klemmkörpern), die einen Einbau von mehr Klemmkörpern pro An- und Abtriebsscheibe erlauben, ohne daß diese in bestimmten exzentrischen Stellungen aneinanderstoßen.

Nach einer weiteren Ausgestaltung der Erfindung ist vorgesehen, daß die Kontaktkörper mindestens in einer Richtung einen axial abstehenden Zapfen aufweisen, der zur Ausleitung des Drehmomentes in einer Ausnehmung des Abtriebselementes eingreift. Nach einer Weiterbildung der Erfindung besitzen beide Kontaktkörper eines Klemmelementes einen axial abstehenden Zapfen und sind jeweils derart axial verschiebbar, daß alternativ nur einer der Zapfen zur Drehmomentübertragung verwendet wird. Auf diese Weise wird eine einfache Umschaltmöglichkeit der Freilaufrichtung geschaffen, je nach dem, welcher Zapfen der beiden Kontaktkörper in die Ausnehmung des Abtriebselementes eingreift.

Statt der genannten Rollen oder Kugeln können in einer weiteren Ausführungsform der Erfindung, insbesondere für die Übertragung besonders hoher Drehmomente Kontaktkörper mit einem unrunden Querschnitt verwendet werden, die einen Flächenabschnitt aufweisen, der im wesentlichen der Form der Ringnut angepaßt ist, an der sie in der drehmomentübertragenden Stellung reibschlüssig anliegen. Bei dieser Ausführungsform ist es zwar nicht mehr möglich, daß die Kontaktkörper eine Roll- oder Wälzbewegung ausführen, jedoch entsteht statt der bei Kugeln und Rollen auftretenden Linienberührung mit der Hertzschen Preßung beim Übergang in den Verriegelungszustand ein Vollflächenkontakt, der höher belastbar ist. In der Praxis kann hierdurch die Kontaktfläche um einen Faktor 10² und damit proportional auch das zulässige übertragbare Drehmoment vergrößert werden. Auch auf der Innenseite, d.h. zum Grundkörper hin, können die Konturen der Kontaktkörper so ausgeführt sein, daß im Sperrzustand ein Vollflächenkontakt entsteht, wodurch um ein Vielfaches höhere Lasten bei der Drehmomentübertragung zulässig werden. Vorzugsweise besitzt der Flächenabschnitt der Kontaktkörper, der mit der Ringnutwandung einen Flächenkontakt im Sinne einer reibschlüssigen Anlage bilden kann, einen Krümmungsradius, der dem Krümmungsradius der Ringnutwandung angepaßt ist, wobei das Verhältnis der genannten Radien zur Minimierung der Hertz'schen Pressung zwischen 0,6 und 1,4, vorzugsweise zwischen 0,8 und 1,2, liegt. Im Bereich zwischen der losen Kontaktlage bis zur vollen Verriegelung (drehmomentübertragende Stellung) bleiben die Kontaktkörper schlupffrei und ohne Relativbewegung an den Ringnutflächen liegen, während die Rotationsbewegung der Teile des Grundkörpers, die zum Aufbau der Normalkräfte notwendig ist, an allen Stellen eine verlust- und verschleißarme Wälzbewegung bildet. Vorzugsweise sind hierzu die Konturen zwischen dem Grundkörper und den Kontaktkörpern, die gegenüberliegen, im Schnitt kreisförmig.

Die Anfederung erfolgt bevorzugt durch Aufspreizen der betreffenden Kontaktkörper (bzw. Kontaktflächen) mit einer Feder oder durch hiermit verbundene Elemente, die in einer weiteren Ringnut im Boden der Ringnut abgestützt werden.

Da die Klemmwinkel mit ca. 4° wegen der Klemmbedingung (Klemmwinkel ist kleiner als arctan des Reibungskoeffizienten) sehr klein sind, sind die Klemmkörper prinzipiell sehr toleranz- und verschleißempfindlich. Sobald nämlich durch Abrieb die Gesamtlänge des Klemmkörpers geringer geworden ist als der Klemmspalt, besteht die Gefahr, daß der Klemmkörper umschlägt. Um diesem entgegenzuwirken, ist nach einer weiteren Ausgestaltung der Erfindung vorgesehen, daß der Grundkörper aus zwei Teilen besteht, die berührend mit ihren gegenseitigen Mantelflächen aneinanderliegen, die konvex ausgebildet sind, vorzugsweise im Querschnitt die Form einer logarithmischen Spirale aufweisen. Durch diese Maßnahme wird die Höhe des Klemmkörpers auch dann auf einem konstanten Wert gehalten, wenn die Kontaktkörper durch verschleißbedingten Abrieb zu einer geringeren Höhe des Klemmkörpers geführt haben. Die hiermit zunehmende Rotationsbewegung der Kontaktkörper beim Verriegeln erzeugt somit eine selbsttätige Nachstellung.

Will man die Rotation der genannten Klemmelemente untereinander vermeiden, um die Toleranz- und Verschleißempfindlichkeit zu minimieren, ist nach einer weiteren Ausgestaltung der Erfindung vorgesehen, daß der Kontaktkörper aus Klemmrollen besteht, die auf einem Grundkörper geführt werden, der gegen eine Rotation relativ zur Nutmittelachse drehgesichert ist, vorzugsweise durch mit ihm verbundene, in Hülsen liegende Zapfen, die in einer Ringnut des Antriebselementes geführt werden. Die auf gegenüberliegenden Seiten liegenden Mantelflächen des Grundkörpers, an denen jeweils eine der Klemmrollen anliegt, verlaufen zu einem Ende hin divergierend, wobei sie vorzugsweise im Querschnitt kreisförmig ausgebildet und aus Kreisen konstruiert sind, deren Radius im wesentlichen gleich groß ist, die jedoch um den jeweiligen Berührungspunkt des Grundkörpers mit der jeweiligen Klemmrolle um einen Winkel, vorzugsweise unter 10° und weiter vorzugsweise um 4° im umgekehrten Drehsinn verschwenkt sind.

Um die Leerlaufschleppmomente im Überholbetrieb noch weiter zu vermindern, sind nach einer weiteren Ausführung der Erfindung, insbesondere für die Nutzung als stufenloses Getriebe, die Klemmkörper nicht angefedert, sondern werden lediglich an der Stelle, wo sie verriegelt werden müssen, durch eine ortsfeste Feder, einen Luft- oder Schmiermittelstrahl oder einen Magneten angelegt.

Vorzugsweise kann das Kupplungsgetriebe als regelbarer Antrieb für Kraftfahrzeugnebenaggregate, wie eine Klimaanlage, Lichtmaschine oder ähnliches, verwendet werden. Die genannten Nebenaggregate werden nach dem Stand der Technik mittels eines Keilriemenantriebes betrieben, wobei die momentane Motordrehzahl die Drehzahl des Nebenaggregates festlegt. Am Beispiel einer Klimaanlage wird deutlich, daß im Motorleerlauf nur eine ungenügende Kühlung des Fahrgastinnenraumes erreicht wird, was sich verstärkt dadurch bemerkbar macht, daß kraftfahrzeugbewegungsabhängige Be- und Entlüftungen nicht bzw. nur eingeschränkt gegeben sind. Eine hier eingesetztes erfindungsgemäßes steuerbares oder regelbares Getriebe kann durch entsprechende Drehzahlerhöhung wirksam Abhilfe schaffen. Entsprechendes gilt für die Lichtmaschine oder andere Aggregate.

Die Alternativlösung nach Anspruch 9 ist dadurch gekennzeichnet, daß das Abtriebs- und das Antriebselement jeweils zweischnittig ausgebildet sind, d.h., daß die genannten Elementen jeweils zwei axial versetzte Teile aufweisen, wobei das Antriebs- oder das Abtriebselement aus zwei axial zueinander versetzten Scheiben mit Bohrungen besteht, in die jeweils ein vorstehender Klemmkörperzapfen oder ein mit dem Klemmkörper verbundenes Element eingreift, wodurch eine Tangentialkraft und damit ein Drehmoment zwischen dem Zapfen und den Scheiben übertragbar ist und wodurch bei im wesentlichen spiegelsymmetrischer Anordnung des Antriebs- und des Abtriebselementes relativ zu einer senkrecht zu den betreffenden Längsachsen der Antriebs- und Abtriebswelle liegenden Ebene eine im wesentlichen homogene Spannungsverteilung erzeugbar ist. Im Unterschied zu der im Anspruch 1 beschriebenen Lösung ist der Radialabstand der genannten Klemmkörperzapfen zu der Antriebs- und der Abtriebswelle konstant. Mit Ausnahme der Maßnahmen, die der exzentrischen Verstellung des Antriebs- und des Abtriebselementes dienen, gilt für die im Anspruch 9 beschriebene Ausführungsform somit Entsprechendes wie zu den vorbeschriebenen Ausführungsformen.

Vorzugsweise bestehen die Klemmelemente aus einem ein- oder mehrteiligen Grundkörper und aus einem mehrteiligen Kontaktkörper, der in der drehmomentübertragenden Stellung in einer Führung des Antriebselementes sperrend anliegt, wobei die Klemmflächen der Kontaktkörper teilkreisförmig ausgebildet sind, so daß in der Kontaktzone zu der als Ringscheibe ausgebildeten Führung im wesentlichen eine Flächenberührung entsteht, wobei die Hertz'sche Pressung durch angepaßte Radien der sich berührenden Flächen der Ringscheibe und der Kontaktkörper minimiert wird. Erfindungsgemäß wird somit ein reibschlüssiger Vollflächenkontakt angestrebt. Das Verhältnis der Radien der Klemmkörperflächen und des Radius der Ringscheibe, die in der drehmomentübertragenden Stellung aneinander anliegen, liegt zwischen 0,6 und 1,4, vorzugsweise zwischen 0,8 und 1,2.

Eine weitere bevorzugte Verwendung des erfindungsgemäßen Getriebes ist im Bereich eines Fahrradantriebes gegeben.

Ausführungsbeispiele der Erfindung sind in den Zeichnungen dargestellt. Es zeigen
- Fig. 1 und 2: jeweils schematische Perspektivansichten von Kupplungen,
- Fig. 3: eine Draufsicht auf ein Abtriebselement,
- Fig. 4: eine teilgeschnittene Ansicht einer als Getriebe ausgebildeten Kupplung,
- Fig. 5: ein mehrstufiges Getriebe,
- Fig. 6a und b: eine Draufsicht und eine Schnittansicht eines Getriebes, verwendbar für ein Fahrradgetriebe,
- Fig. 7a und b: jeweils eine Draufsicht sowie eine Schnittansicht eines Getriebes, ausgebildet als Satellitengetriebe,
- Fig. 8, 9: jeweils eine Draufsicht und eine Schnittansicht eines Getriebes als Antrieb für ein Nebenaggregat,
- Fig. 10: eine Draufsicht auf ein Antriebselement mit in einer Nut geführten Klemmelementen,
- Fig. 11: eine Prinzipdarstellung eines Antriebselementes und eines Abtriebselementes mit mehreren Klemmelementen,
- Fig. 12: eine Prinzipdarstellung eines mehrstufigen Getriebes entsprechend Fig. 11,
- Fig. 13: eine Draufsicht auf ein Antriebselement mit einer andersartigen Ausführungsform für ein Klemmelement,
- Fig. 14: eine entsprechende vergrößerte Darstellung des Klemmelementes nach Fig. 13,
- Fig. 15 bis 18: jeweilige Darstellungen einer weiteren Ausführungsform eines Klemmelementes,
- Fig. 19: eine Ausführungsform einer erfindungsgemäßen Kupplung in einer perspektivischen Ansicht,
- Fig. 20: eine Teil-Draufsicht auf die Ausführungsform nach Fig. 19 in vergrößerter Darstellung,
- Fig. 21: eine weitere Ausführungsform der erfindungsgemäßen Kupplung,
- Fig. 22: eine Ausführungsform einer erfindungsgemäßen Kupplung mit einer Ringkörper-Führung für das Klemmelement,
- Fig. 23: eine vergrößerte perspektivische Ansicht eines Klemmelementes und
- Fig. 24: eine perspektivische Ansicht einer alternativen Ausführungsform nach der vorliegenden Erfindung.

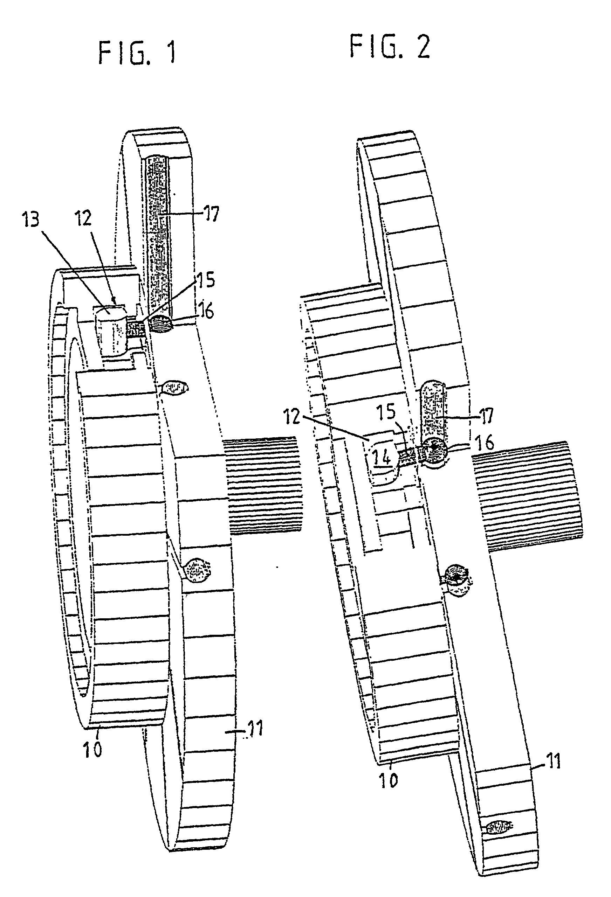

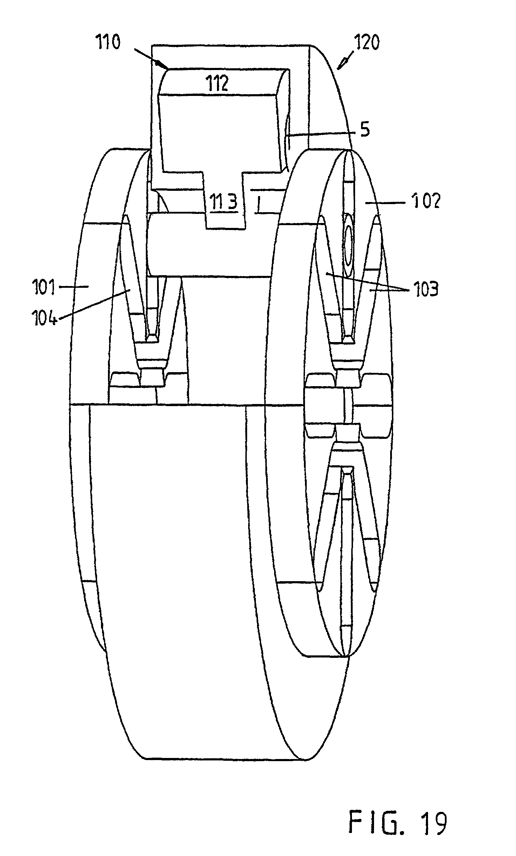

Erfindungsgemäße Kupplungen mit Klemmkörperzapfen, die zweischnittig ausgebildet sind, sind in Fig. 19 bis 24 dargestellt, anhand der Fig. 1 bis 18 werden demgegenüber Weiterbildungen und zweckmäßige Ausführungsformen am Beispiel einschnittiger Klemmkörper, die nicht Gegenstand der Erfindung sind, im einzelnen erläutert.

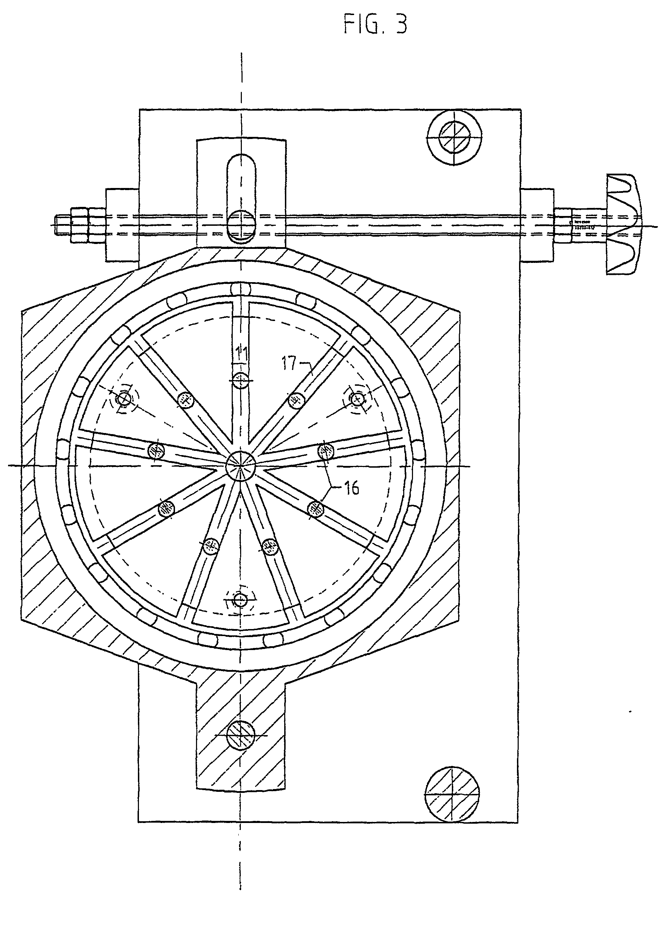

Die in Fig. 1 und 2 dargestellte Kupplung besitzt jeweils ein scheibenförmiges Antriebselement 10 und ein Abtriebselement 11. Das Antriebselement 10 weist eine Ringnut 12 auf, in der Klemmelemente 13 bzw. 14 zirkular bewegt werden. Diese Klemmelemente 13 und 14 weisen einen hervorstehenden Zapfen 15 auf, dessen verdicktes Ende 16 in radial verlaufenden Nuten 17 gelagert ist. Bei koaxialer Anordnung der Antriebs- und der Abtriebsscheibe beträgt das Übersetzungsverhältnis 1 : 1, wobei die als Klemmkörper ausgebildeten Teile im Freilaufzustand in der Ringnut 12 sich zirkular frei bewegen. Im Sperrzustand blockieren die Klemmkörper 13 in der Ringnut, wodurch das an der Scheibe 10 anliegende Drehmoment auf die Abtriebsscheibe 11 übertragen wird. Die radiale Lage der Klemmkörper und der Zapfen 15 bzw. der Verdickungen 16 ist Fig. 3 exemplarisch für ein Übersetzungsverhältnis 1 : 1 zu entnehmen.

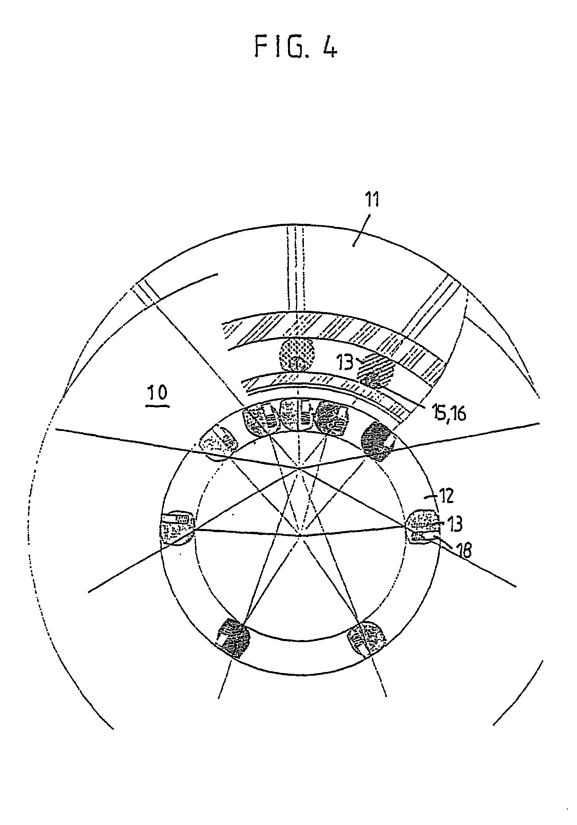

Bei exzentrischer Verstellung der Antriebsscheibe zur Abtriebsscheibe ändert sich die Winkeldifferenz bzw. der Tangentialabstand der Klemmkörper 13 in der Ringnut 12, wie dies Fig. 4 zu entnehmen ist. Die Klemmkörper 13 durchlaufen hierbei einen drehmomentübertragenden Lastweg (im oberen Bereich der Ringnut 12) und einen lastfreien Weg (im unteren Bereich der Ringnut). Die Zapfen 15 bzw. die endseitigen Verdickungen 16 können entsprechend der exzentrischen Verstellung radial in der Nut 17 ausweichen, sie bleiben jedoch gegenüber dem Abtriebselement, der Abtriebsscheibe 11 jeweils mit dieser drehstarr verbunden. Das Lösen der Klemmkörper aus dem Sperrzustand in den Freilaufzustand wird durch federnd gelagerte Stifte 18 unterstützt, wie dies bei Klemmkörperfreiläufen im Prinzip nach dem Stand der Technik bekannt ist.

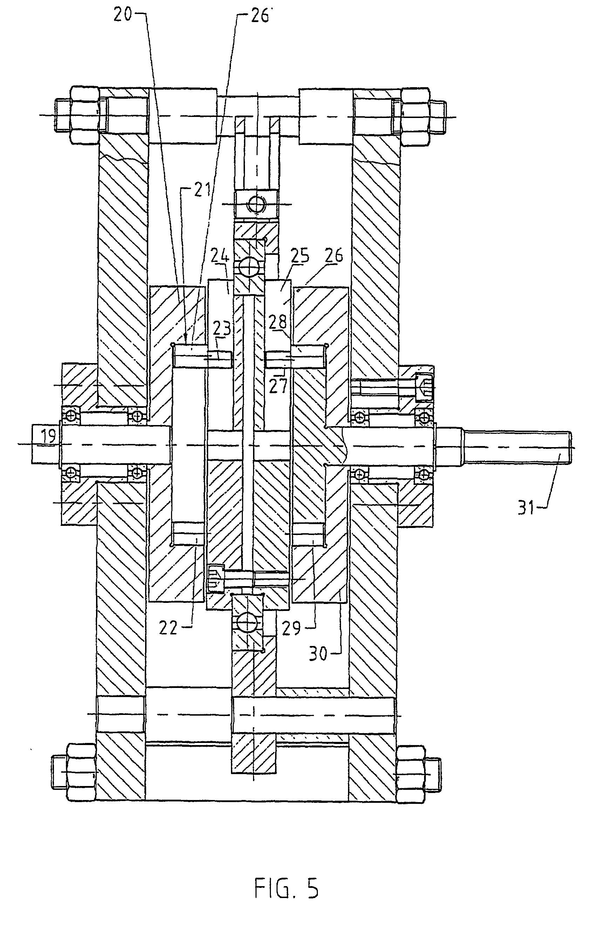

Die Kupplung in Form eines zweistufigen Getriebes ist Fig. 5 zu entnehmen. In der dargestellten Ausführungsform wird die Drehbewegung einer Antriebswelle 19 auf eine Antriebsscheibe 20 übertragen, in deren Ringnut 21 Klemmkörper 22 angeordnet sind. Diese Klemmkörper weisen axial abstehende Zapfen 23 auf, die in Radialnuten 24 einer Sternscheibe 25 eingreifen, wodurch Drehbewegungen der Antriebsscheibe 20 auf die Sternscheibe 25 im Sperrzustand der Klemmkörper 21 übertragen werden. Die Sternscheibe 25 ist relativ zu der durch die dargestellte Achse 26 gehende Radialebene spiegelsymmetrisch aufgebaut und besitzt entsprechend den Ringnuten 24 ausgebildete Ringnuten 26 auf der gegenüberliegenden Seite, in die jeweilige Zapfen 27 von Klemmkörpern 28 eingreifen, die in entsprechenden Ringnuten 29 einer Abtriebsscheibe 30 zirkular bewegbar sind. Im Sperrzustand der Klemmelemente 28 wird die Drehbewegung von der Sternscheibe 25 über die Abtriebsscheibe 30 auf die Abtriebswelle 31 übertragen.

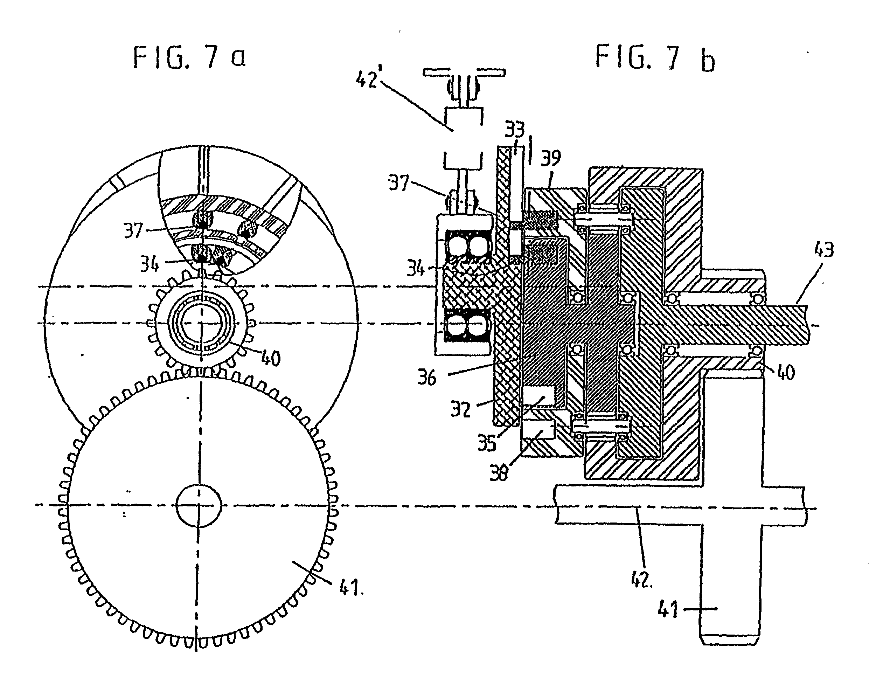

Das vorstehend beschriebene Prinzip ist im Rahmen des Erfindungsgedankens in mehrerlei Hinsicht abwandelbar. So können entsprechend der Darstellung nach Fig. 1 die Klemmkörper so ausgerichtet sein, daß der Klemmzustand über eine Drehung um eine Achse durchgeführt wird, die parallel zu der Drehachse der An- und Abtriebselemente 10, 11 liegt oder - entsprechend der Darstellung in Fig. 2 - durch Drehung um eine Achse, die vertikal zu der genannten Drehachse liegt. Weiterhin ist es möglich, anstelle der doppelseitig mit Radialnuten versehenen Sternscheibe 25 diese Scheibe im Hinblick auf die Antriebsscheibe 20 und die Abtriebsscheibe 30 so auszubilden, daß die Scheiben 20 und 30 auf ein und derselben Seite liegen, wobei eine der Scheiben 30 die andere radial übergreift. Eine solche Ausführungsform ist im Rahmen des in Fig. 7a und b dargestellten Satellitengetriebes realisiert. Die drehbar gelagerte Scheibe 32 besitzt Radialnuten 33, in denen sowohl die Zapfen 34 der in Radialnuten 35 der Antriebsscheibe 36 geführten Klemmkörper als auch die Zapfen 37 der Klemmkörper geführt werden, die in Radialnuten 38 einer ringförmigen Abtriebsscheibe 39 gelagert bzw. geführt werden. Die Drehbewegung der Abtriebsscheibe 39 wird mittels eines Zahnkranzes 40 auf ein Zahnrad 41 bzw. deren Abtriebswelle 42 übertragen. In dem in Fig. 7b dargestellten Ausführungsbeispiel dient ein Hydraulikzylinder 42' zur exzentrischen Verstellung der Scheibe 32. Bei exzentrischer Verstellung der Scheibe 32 wird die Drehbewegung der Antriebswelle 43 je nach Exzenterverstellung entsprechend der Getriebedimensionierung auf die Drehzahl der Abtriebswelle transformiert.

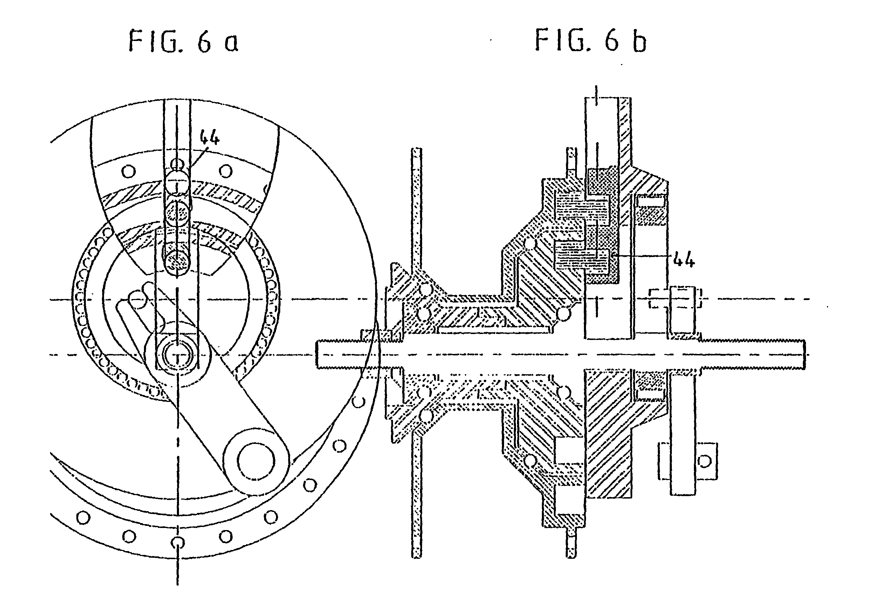

Nach der in Fig. 6a, b dargestellten Ausführungsform, die in Form eines Fahrradantrieb-Satellitengetriebes ausgebildet ist, werden die Klemmkörperzapfen in einem radial beweglichen Schlitten 44 gelagert, der anstelle der mit Radialnuten versehenen Abtriebsscheibe tritt. Durch Radialverschiebung des Schlittens 44 kann in entsprechender Weise eine Drehzahlveränderung bewirkt werden.

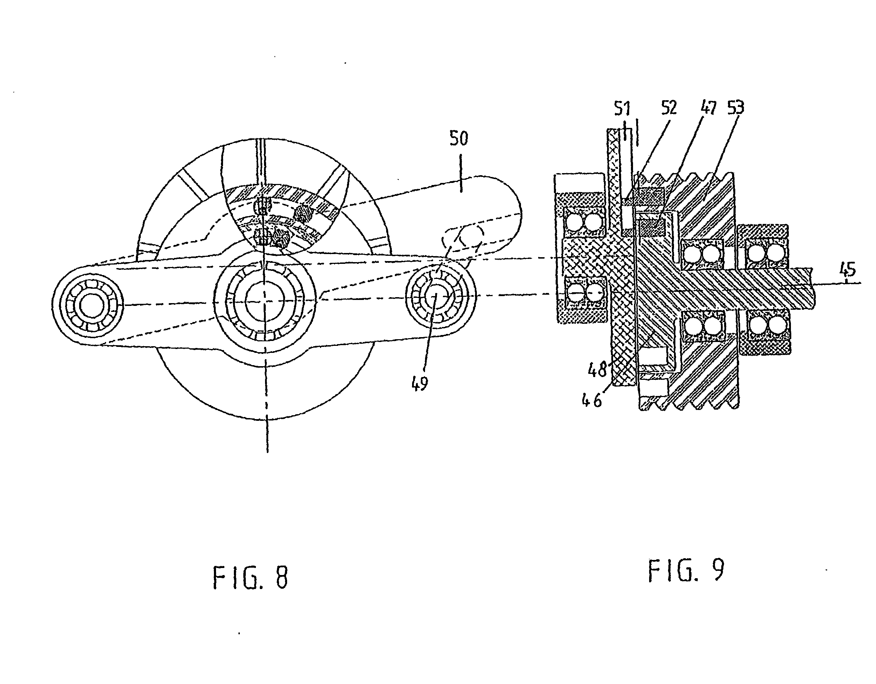

Ein Anwendungsbeispiel in Form eines Antriebes für Nebenaggregate, Zapfwellen etc. ist aus Fig. 8 und 9 ersichtlich. Die über eine Antriebswelle 45 eingeleitete Drehbewegung wird mittels der Scheibe 46 und der Klemmkörper 47, die in entsprechenden Ringnuten zirkular bewegbar sind bzw. dort sperren, auf eine Scheibe 48 übertragen, die exzentrisch zur Achse der Welle 45 beispielsweise von Position 49 in Position 50 bewegbar ist. Hierdurch wird erreicht, daß die in den Radialnuten 51 der Scheibe 48 geführten Zapfen 52 der in einer Riemenscheibe 53 verankerten Klemmelemente die sich aus der Exzenterverstellung ergebende Drehzahl transformieren. Anstelle eines hydraulischen Verstellelementes wird die Exzenterverstellung mittels eines Stellmotors (regelbaren Schrittmotores oder ähnlichem) durchgeführt.

Weitere Variationen, insbesondere im Hinblick auf die Kompensation einer Ungleichförmigkeit der Drehmomentübertragung sind in entsprechender Weise, wie in der WO 95/03503 beschrieben, mit der Maßgabe verwendbar, daß anstelle der nach dem Stand der Technik bekannten Freilaufkupplungen die erfindungsgemäßen Kupplungen eingesetzt werden.

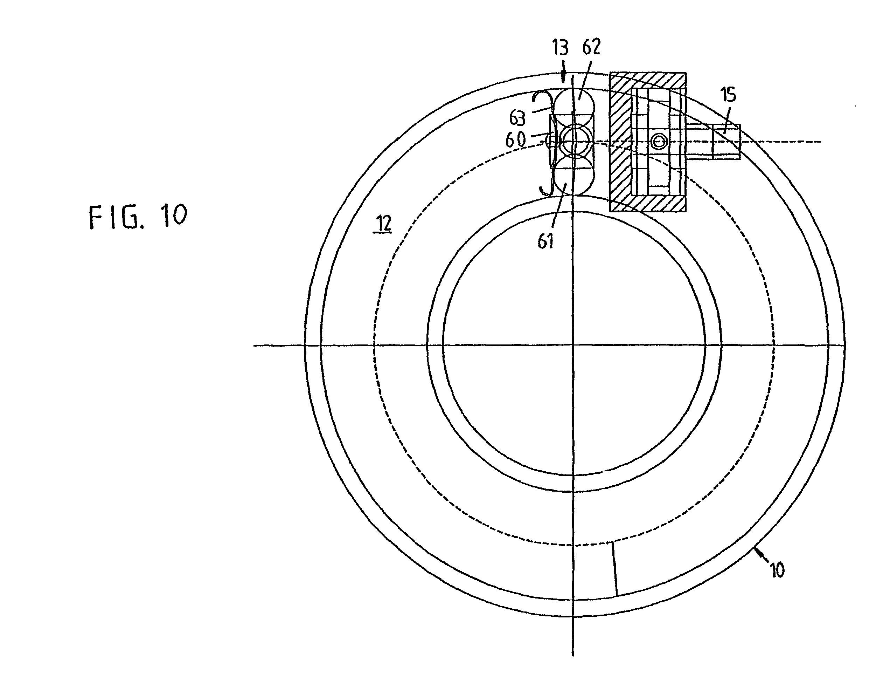

Wie aus Fig. 10 ersichtlich, setzt sich das Klemmelement 13, das in einer Nut 12 des Antriebselementes 10 und relativ hierzu beweglich oder sperrend angeordnet ist, aus mehreren Teilen zusammen, nämlich einem Grundkörper 60 sowie zwei aus Rollen 61 und 62 bestehenden Kontaktkörpern, die an den Wandungen der Nut 12 anliegen und einer Feder 63, deren Direktionskraft die Anlage der Rollen 62 und 61 mit der Nut 12 bewirkt. Der Grundkörper ist mit einem axial hervorstehenden Zapfen 15 versehen, der in eine entsprechende Ausnehmung des Abtriebselementes, vorzugsweise eines Nut 17 (vgl. Fig. 1 und 2) eingreift.

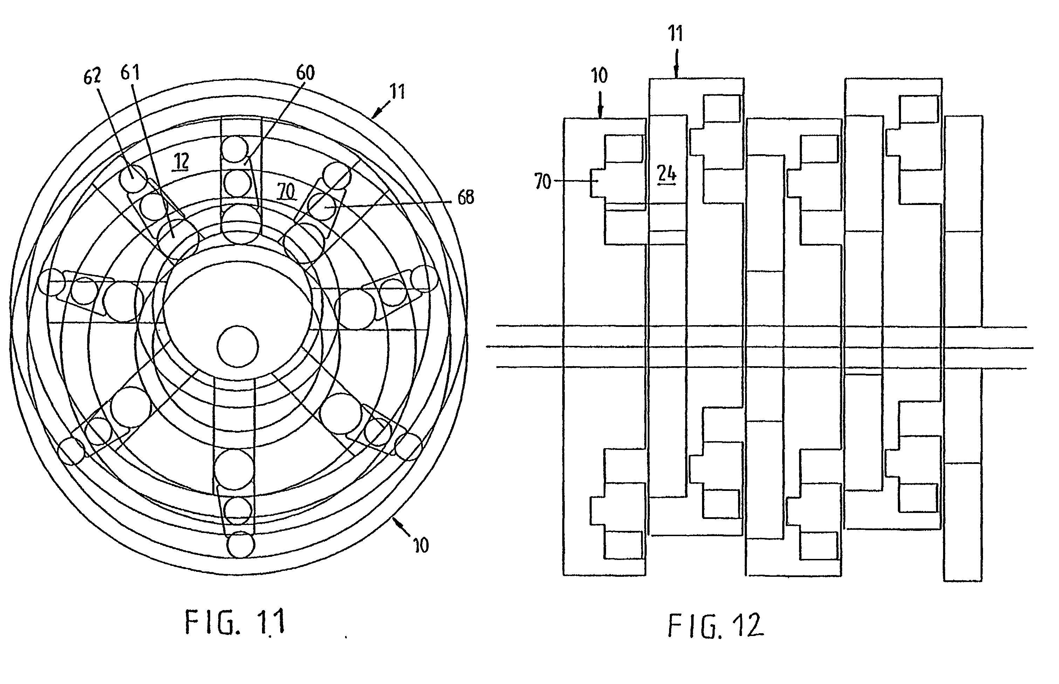

Der Darstellung nach Fig. 11 ist eine weitere Ausführungsform zu entnehmen, bei der ein Grundkörper 60 mit einem Zapfen 68 verbunden ist, der in einer Nut 70 geführt wird, die im Boden der Ringnut 12 angeordnet ist. Als Kontaktkörper sind Rollen 61 und 62 vorgesehen, die entlang den Wandungen der Nut 12 laufen. Die betreffende Ausführungsform kann gemäß Fig. 12 als mehrstufiges Getriebe (hiermit jeweils zwei An- und Abtriebsscheiben 10 oder 11) ausgeführt sein.

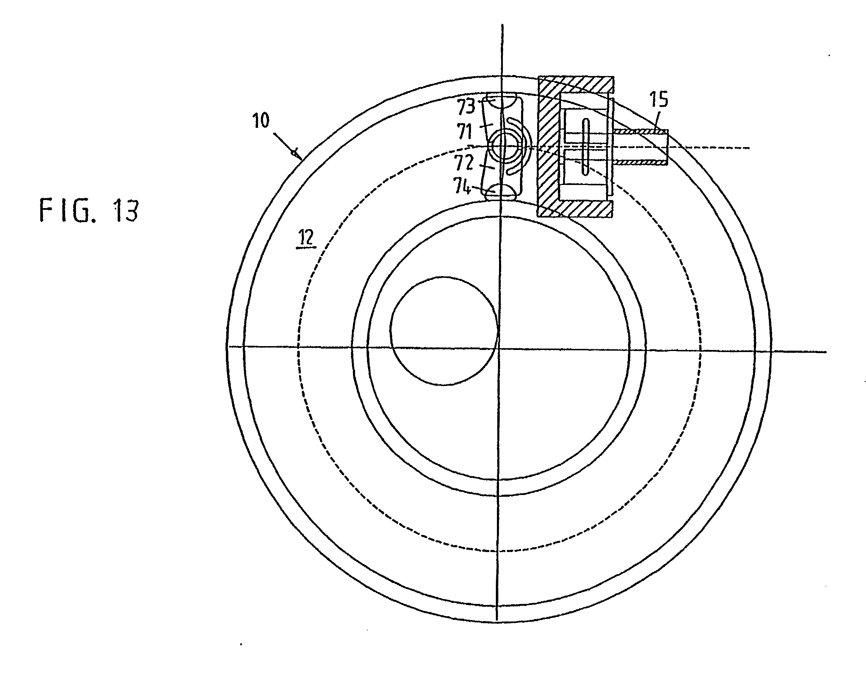

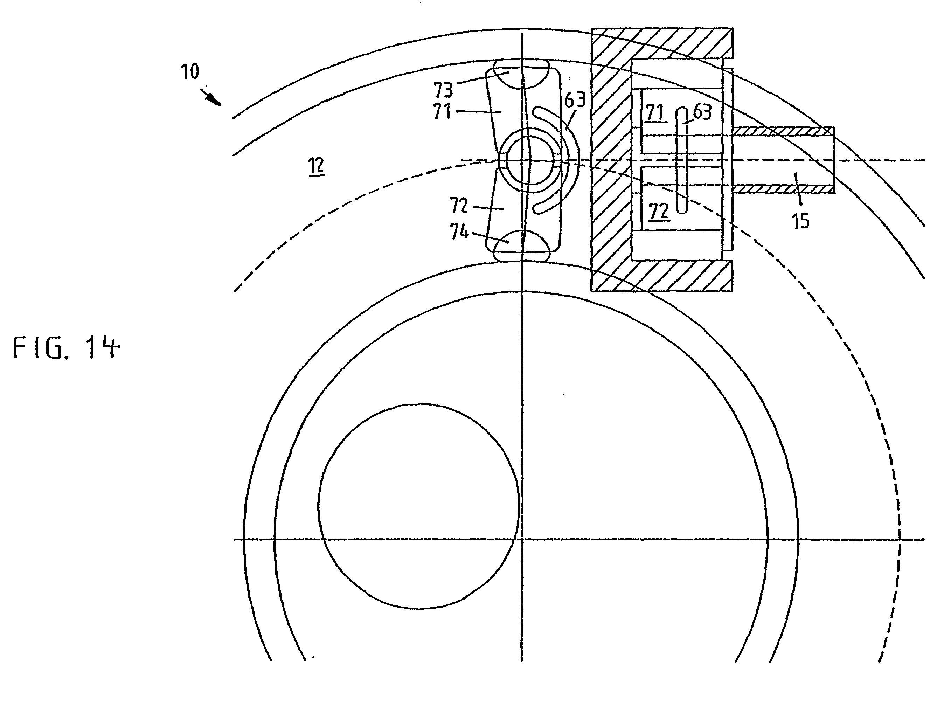

Eine weitere alternative Ausführungsform ist den Fig. 13 und 14 zu entnehmen. Der Grundkörper besteht hier aus zwei Teilen 71 und 72, die, wie aus der Schnittdarstellung ersichtlich, mit ihren den Wandungen der Nut 12 zugewandten Seitenflächen eine Schale aufweisen, in der die entsprechenden Gegenflächen der Kontaktkörper 73 und 74 gelagert sind, die über eine Feder 63 in die Verriegelungsstellung mit dem Antriebselement, der Scheibe 10 überführt werden können. Die den Wandungen der Nut 12 zugewandten Flächen der Kontaktkörper 73 und 74 besitzen eine Form, die radiusidentisch der Krümmung dieser Wandungen ist. Hierdurch kann ein großflächiger Reibschluß erzeugt werden.

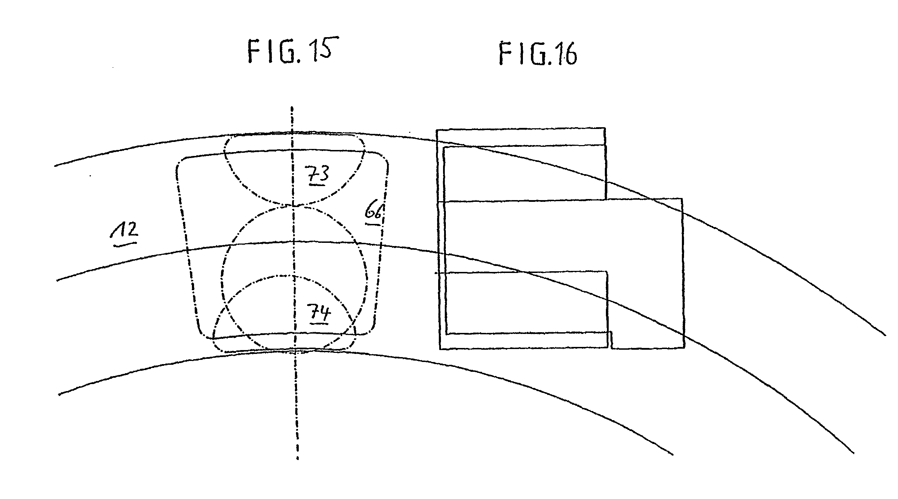

Fig. 15 und 16 zeigen eine Ausführungsform mit einem einstückigen Grundkörper 66, in dem an gegenüberliegenden Seiten Kontaktkörper 73, 74, wie zuvor beschrieben, in entsprechenden schalenförmigen Ausnehmungen anliegen.

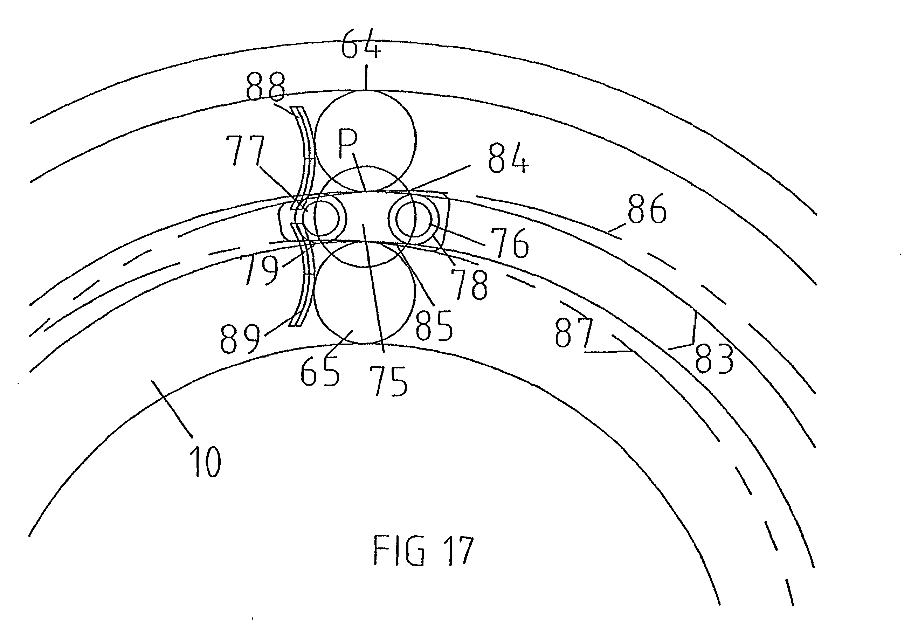

In der Ausführungsform nach Fig. 17 wird eine Rotation der Klemmkörpers vollständig verhindert, womit die Toleranz- und Verschleißempfindlichkeit weiter vermindert wird. Hierzu werden die Klemmrollen 64 und 65 auf einem Grundkörper 75 geführt, der seinerseits durch mit ihm verbundene Zapfen 76 und 77 mit Hülsen 78 und 79 in einer Nut 83 des Antriebselementes 10 gegen eine unerwünschte Rotation gesichert ist. Die den Klemmrollen 64 und 65 zugekehrten Mantelflächen des Grundkörpers sind so gewählt, daß in jeder Position, in welcher die Klemmrollen 64 und 65 durch Verschleiß oder Toleranz oder Elastizitäten bis zum Verriegeln rollen können, der gleiche Klemmwinkel anliegt. In der in Fig. 17 dargestellten Ausführung wird die Kontur durch die gestrichelt dargestellten Linien 86 und 87 angedeutet. Die betreffenden konkaven Flächen 84 und 85 des Grundkörpers können konstruktiv derart gebildet werden, daß zunächst Kreise mit dem Mittelpunkt des Antriebselementes 10 durch den jeweiligen Berührungspunkt P zwischen der Klemmrolle 64 bzw. 65 und dem Grundkörper 75 gezeichnet werden, die dann um den jeweiligen Klemmwinkel, von z.B. 4°, um diesen Punkt so verdreht werden, daß der Grundkörper 75 eine enger werdende Rampe mit der Ringnut 12, in der die Klemmkörper rollen, bildet. Im Punkt P hat dabei der Grundkörper 75 die Höhe mit der Toleranz 0, d.h., die Differenz des Klemmspaltenmaßes minus beider Rollendurchmesser ist das Nennmaß. Zur Anfederung der Klemmrollen 64 und 65 dienen die Drahtfedern 88 und 89, die einseitig mit dem Grundkörper 75 verbunden sind.

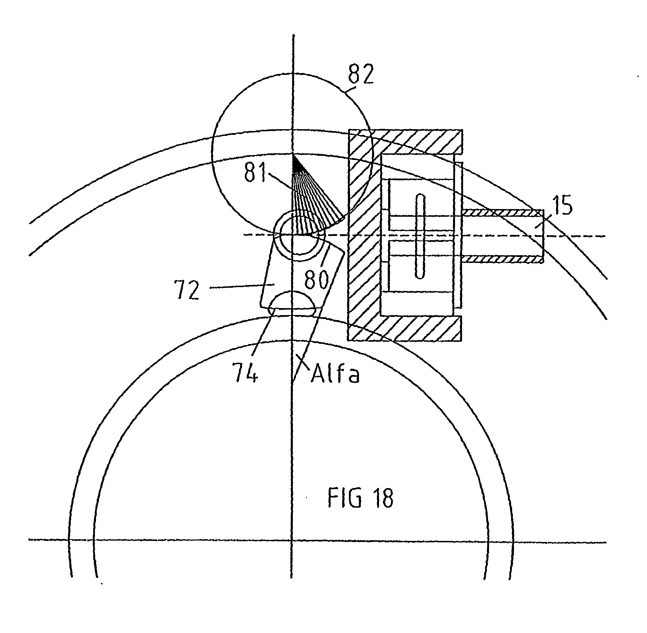

Fig. 18 zeigt eine Weiterentwicklung der Ausgestaltung nach Fig. 13, bei der der obere Grundkörperteil 71 und der dazugehörige Klemmkörper 74 der Übersichtlichkeit halber nicht dargestellt sind. Bei einer Ausführungsform entsprechend der in Fig. 13 (bzw. 14) dargestellten besteht der Nachteil, daß bei einem angenommenen Klemmwinkel von 4° die Länge des Klemmkörpers insgesamt nur um den Faktor 1/cos 4° = 1,002442 größer ist als der Klemmspalt. Bei einer Klemmspalthöhe von z.B. 10 mm ist damit der Klemmkörper insgesamt nur ca. 2,4/100 mm länger als der Klemmspalt, was bedeutet, daß bei geringem Verschleiß oder einer kleinen Elastizität im Klemmkörper oder in der Ringnut der Klemmwinkel drastisch abnimmt und unter Umständen auch zu 0 werden kann, wodurch der Klemmkörper umschlagen würde.

Um dem abzuhelfen ist die Mantelfläche 80, mit der die beiden Grundkörper 71 und 72 aneinander anliegen und bei einer Veränderung des Klemmwinkels α aufeinander abrollen, nicht kreisförmig, sondern mit größer werdendem Radius bei wachsendem Klemmwinkel α ausgebildet. Die Aussparung für den Zapfen 15 dient nur der Ausleitung des Drehmomentes, die Normalkräfte aus dem Klemmvorgang werden direkt über die Grundkörper 71 und 72 gegeneinander übertragen.

Die Kontur 80 der gegenseitigen Berührungsfläche der Grundkörper 71 und 72 läßt sich aus den fächerartig dargestellten Stützradien iterativ konstruieren, wobei der jeweils nächste Stützradius gegenüber dem vorhergehenden um 4° mathematisch um den dargestellten Mittelpunkt des Kreises 82 verdreht ist. Jeder folgende Radius nimmt in der Länge um den Faktor 1/cos 4° zu (unter der Annahme, daß der Klemmwinkel 4° beträgt, ansonsten wären entsprechende andere Winkelmaße zu übernehmen). Die wirksame Gesamthöhe des Klemmkörpers nimmt also zu, wenn der Klemmwinkel α abnimmt, da beim Abrollen der beiden Grundkörper 71 und 72 auf ihrer jeweiligen Mantelfläche 80 die Stützradien am jeweiligen Kontaktpunkt größer werden. Die Fläche 80 ist im Querschnitt bevorzugt als logarithmische Spirale ausgebildet, wie dies auch in Fig. 18 dargestellt ist. Alternativ können aber auch andere Konturen gewählt werden, mit denen dem Verschleißverhalten oder den Elastizitäten der Bauteile oder anderen Einflußgrößen, welche den Einfluß des Winkels α auf die Klemmwirkung bestimmen, so begegnet werden kann, daß eine sichere Verriegelung ohne die Gefahr eines Umschlagens erreicht wird.

Bei der in Fig. 19 dargestellten Lösung besteht das Abtriebselement aus zwei Scheiben 101 und 102, die miteinander über eine gesamte Welle verbunden sind. Jede dieser Scheiben 101 und 102 besitzt Ringnuten 103 bzw. 104 als Radialführungen für endseitige Klemmkörperzapfen 111 eines Klemmelementes 110, das aus dem eigentlichen Klemmkörper 112, der in einer Ringnut der Antriebsscheibe 120 kippbar umläuft, ferner einem vertikal zur Ringnutfläche und aus dieser herausragenden Zapfen 113 und schließlich einem querliegenden Zapfen besteht, dessen Enden 111 die Stirnseiten des Antriebselementes 120 seitlich überragen. Die Teile 112, 113 und der querliegende Zapfen sind einstückig ausgeführt. Der Klemmkörper 110 besitzt durch die gewählte Radialführung 103, 104 der beiden Sternscheiben 101 und 102 nur einen Freiheitsgrad, nämlich den, den er zum Schwenken von der drehmomentübertragenden Stellung in die lastfreie Stellung zum Umschwenken um die Achse S benötigt. Die Achse S, die Längsachse des querliegenden Zapfens und die beiden Drehachsen des Abtriebselementes 101, 102 und des Antriebselementes 120 liegen parallel. Ein Verkanten des Klemmkörpers 112 durch Kippung in andere Richtungen ist damit wirkungsvoll ausgeschlossen.

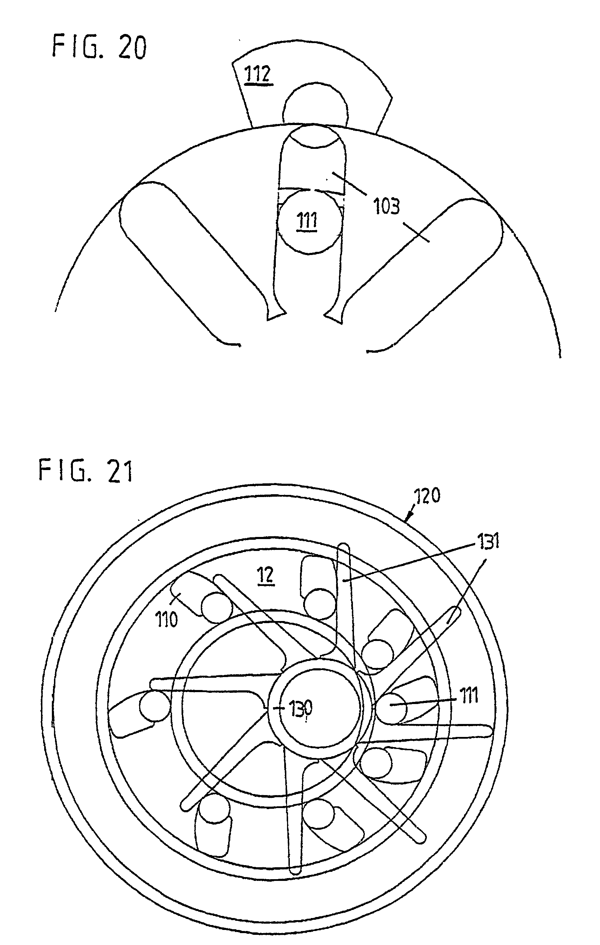

Anstelle der scheibenförmigen Abtriebselemente 101 und 102 kann auch entsprechend der Fig. 21 ein Abtriebselement gewählt werden, das zahnradartig ausgebildet ist und aus einer Welle 130 besteht, auf der radial abstehende Arme 131 angeordnet sind. Die Arme 131 sind gegenüber einer Vertikalen zur Mantelfläche der Welle 130 µm etwa 40° bis 50° geneigt. Die Klemmelemente 110 haben denselben Aufbau wie in Fig. 19 dargestellt und laufen zirkular in Ringnut-Führungen des scheibenförmigen Antriebselementes, zu dessen beiden Stirnseiten jeweils ein aus Teilen 130, 131 bestehendes Abtriebselement angeordnet ist. Die Arme 131 werden im Lastbogenweg durch die querliegenden Zapfen der Klemmelemente mit dem anliegenden Drehmoment beaufschlagt. Im lastfreien Weg, d.h. in der Überholphase, werden die Klemmkörper 110 über einen nicht dargestellten Draht oder elastischen Ring von den Armen 131 mitgenommen. Das Abtriebselement 130, 131 ist gegenüber dem Antriebselement 120 exzentrisch verstellbar.

Vorzugsweise wird der querliegende Zapfen als drehbare Hülse ausgeführt, um die Reibungsverluste zu minimieren.

Die Geometrie der gegenseitigen Anordnung der Ringnut und der Arme 131 wird vorzugsweise so gewählt, daß die Drehmomentübertragung über die querliegenden Zapfen nur im Bereich eines geringen Abstandes zur Welle 130 stattfindet. Die Drehmomentübertragung, die nach Fig. 21 im Bereich der rechten Bildhälfte stattfindet (Lastbogenweg) wird über die querliegenden Zapfen auf die Arme 131 in der Armhälfte übertragen, die an die Welle 130 anschließt, wohingegen die äußere Hälfte der Arme nicht mit einer Drehmomentbeaufschlagung beansprucht werden. Im in der linken Bildhälfte dargestellten lastfreien Weg werden die äußeren Spitzen der Arme 131 nur in soweit beansprucht, wie dies zur Mitnahme der Klemmelemente bzw. querliegenden Zapfen über elastische Verbindungen mit den Armen notwendig ist.

Da anstelle der vorbeschriebenen Radialnuten 12 die Zwischenräume zwischen den Armen 130 die Radialführung übernehmen, ist die Ringnut 12 entsprechend breit zu wählen, wobei deren Innendurchmesser durch den Durchmesser der Welle 130 und das gewünschte Maß der exzentrischen Verstellung des Antriebselementes zum Abtriebselement bestimmt ist.

Selbstverständlich kann beim Aufbau der Kupplungen nach Fig. 19 bis 21 auch auf die vorbeschriebene Ausgestaltung der Klemmkörper nach Fig. 11 bis 18 zurückgegriffen werden.

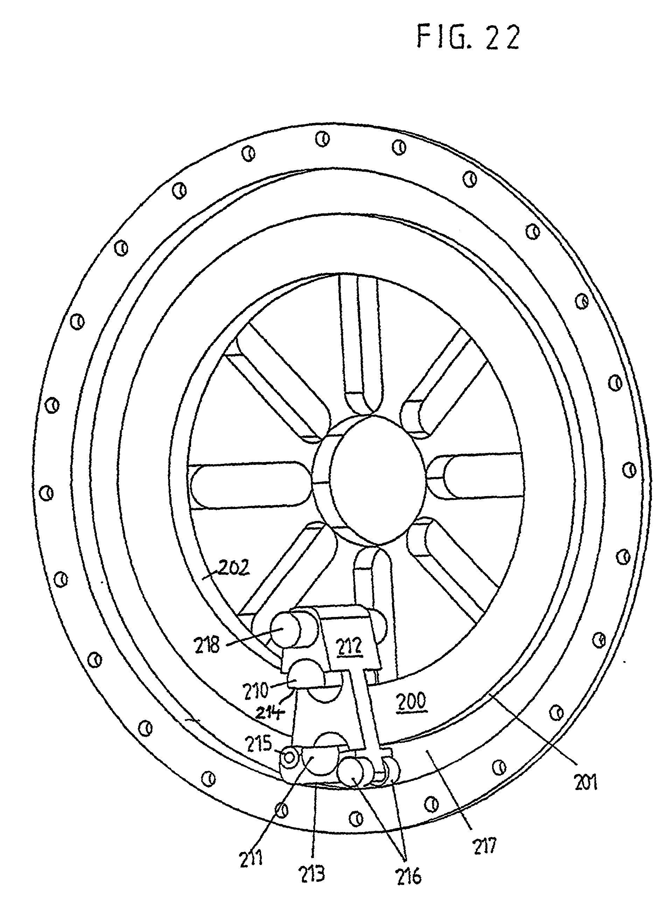

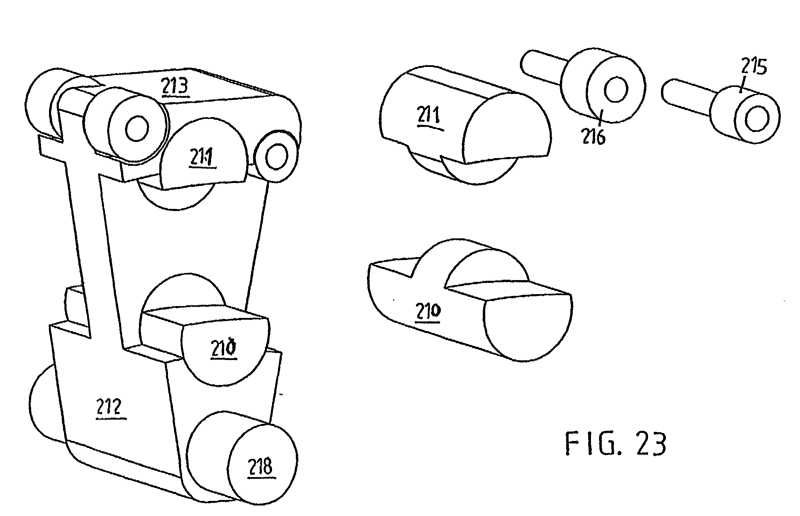

Wie aus Fig. 22 und 23 ersichtlich, wird in der dortigen Kupplungsausführung anstelle der Ringnut ein Klemmring 200 verwendet, der im sperrenden Zustand, d.h. in der drehmomentübertragenden Stellung durch Klemmsteine 210 und 211 reibschlüssig umgriffen wird. Die Klemmsteine 210 und 211 sind jeweils mit ihren konvexen Außenflächen gleitfähig in konkaven Flächen der Körper 212 und 213 gelagert. Die konkave Unterseite des Klemmsteines 211 ist dem Radius der Stirnflächen 201 angepaßt, Entsprechendes gilt für die Stirnfläche 202, die dem Radius der leicht konvexen Fläche 214 des Klemmsteines 210 entspricht. Das Bauteil 213 weist jeweils Rollenpaare 215 und 216 auf, die eine Rollbewegung an den entsprechenden Ringflächen der Nut 217 in der Freilaufstellung ausführen. Durch Kippung des in Fig. 23 dargestellten Klemmelementes drücken die Klemmsteine vollflächig auf die Ringstirnflächen 201 und 202. Der Bolzen 218 liegt in der Bohrung und steht beidseitig über, so daß dessen Enden in den beschriebenen Radialnuten geführt werden können. Die Verwendung eines Klemmringes 200 anstelle einer Klemmnut mit darin befindlichen Klemmelementen hat den Vorteil, daß der Klemmring nur Druck- und keine Biegespannungen aufnehmen muß, so daß auch bei gering dimensionierten An- bzw. Abtriebsscheiben hohe Momente übertragen werden können. Hiermit wird verhindert, daß in der Ringnut angeordnete Klemmelemente beim Sperren die Ringnut "aufbiegen" können. Im übrigen gelten in entsprechender Weise die zu den Fig. 1 bis 21 dargelegten Funktions- und Ausführungsbeschreibungen.

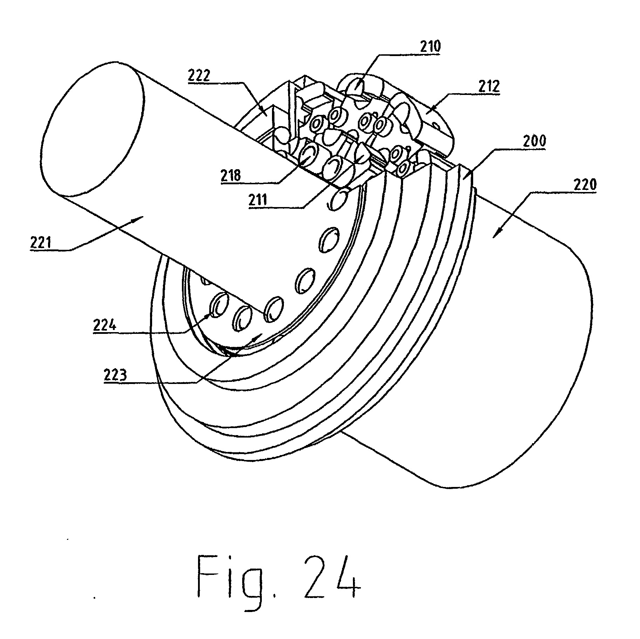

Die in Fig. 24 dargestellte Ausführungsform besitzt eine Antriebswelle 220 und eine Abtriebswelle 221, die auf einem Wälzlager 222 gegeneinander gelagert sind. Das Drehmoment wird im Sperrzustand von dem Klemmring 200 über die Kontaktkörper (Klemmsteine) 210, 211 und die Grundkörper 212 durch die Klemmkörperzapfen 218 übertragen, die in Bohrungen 224 der Scheibe 223 auf der Welle 221 formschlüssig geführt sind.

Die Kupplung nach Fig. 24 ist vorzugsweise (abgesehen von der exzentrischen Verstellbarkeit des Antriebselementes) relativ zum Abtriebselement so aufgebaut, wie dies in Fig. 19 dargestellt und zuvor beschrieben worden ist, also zweischnittig. Das Abtriebselement besitzt somit zwei Scheiben 223, die spiegelsymmetrisch axial zueinander versetzt angeordnet sind. In entsprechender Weise ist auch das Antriebselement zweiteilig aufgebaut. Dieser Aufbau ermöglicht eine Tangentialkraft und damit eine Drehmomentübertragung zwischen den Klemmkörperzapfen 218 und der bzw. den Scheiben 223 in einer symmetrischen Anordnung, so daß auf den Klemmflächen, welche die Kontaktkörper mit der betreffenden Kontaktzone der Ringscheibe bilden, eine im wesentlichen homogene Spannungsverteilung erzeugt wird.

Die Bohrungen 218 sowie die Lagerungen können dabei auch so ausgeführt sein, daß ein Toleranzausgleich von Flucht- und Lagefehlern zwischen den Wellen 220 und 221 möglich wird, ohne dabei die Funktion der Schaltwirkung der Klemmkörper zu beeinträchtigen.

Im übrigen gilt hinsichtlich des Aufbaues der Klemmelemente Entsprechendes wie insbesondere in Fig. 22 und 23 dargestellt und beschrieben.

Soweit in den vorstehenden Darlegungen jeweils das Abtriebselement als Scheibe mit im wesentlichen radial verlaufenden Nuten und das Antriebselement als Scheibe mit einer Ringnut bzw. einem Ringkörper beschrieben worden ist, gelten in entsprechend analoger Weise auch Ausführungsformen als mit von der Erfindung umfaßt, bei denen das Abtriebselement ringförmige Führungen aufweist und das Antriebselement eine Scheibe mit radial verlaufenden Nuten ist.

## Patentansprüche

1. Richtungsgeschaltete Kupplung mit einem Antriebs- (10, 120) und einem Abtriebselement (11; 101, 102; 130, 131), zwischen denen Klemmelemente (13, 14, 110) angeordnet sind, die selbst oder die über mit diesen verbundenen Körpern sowohl in der Freilaufstellung als auch in der drehmomentübertragenden Stellung in bezug auf die Drehrichtung des Abtriebselementes (11; 101, 102; 130, 131) mit diesem drehunbeweglich verbunden sind und die in der Freilaufstellung in einer ringförmigen Führung des Antriebselementes (10, 120) bewegt und in der drehmomentübertragenden Stellung in dieser Führung (12) gesperrt werden, wobei das Abtriebselement (11; 101, 102; 130, 131) radiale Führungen (17; 103, 104) aufweist, in denen jeweils ein vorstehender Klemmkörperzapfen (15, 16; 111) oder ein mit dem Klemmkörper verbundenes Element radial führbar angeordnet ist, und das Abtriebselement (11; 101, 102; 130, 131) exzentrisch zum Antriebselement (10, 120) verstellbar ist, wobei die Klemmelemente (13, 14, 110) bei exzentrischer Einstellung einen drehmomentübertragenden Lastweg und einen lastfreien Weg zyklisch durchlaufen und beim Übergang vom lastfreien Weg zum Lastbogenweg durch Kraft- und/oder Formschlußeingriff mit dem Antriebselement das anliegende Drehmoment übertragen, wobei die Klemmelemente (110) so geführt und ausgebildet sind, daß nur ein zu seinem Schwenken beim Übergang von dem lastfreien Weg zum drehmomentübertragenden Weg benötigter Freiheitsgrad verbleibt,
**dadurch gekennzeichnet,**
daß die Klemmelemente (13) aus einem ein- oder mehrteiligen Grundkörper (60, 66, 71, 72) und aus einem ein- oder mehrteiligen Kontaktkörper (61, 62; 64, 65 ; 73, 74) bestehen, der in der drehmomentübertragenden Stellung in der Führung (12) des Antriebselementes (10) sperrend anliegt und daß vorstehende Klemmkörperzapfen oder ein mit dem Klemmkörper verbundenes Element zweischnittig, d.h. jeweils zwei axial versetzte Teile aufweisend, in radialen Führungen (103, 104) des Abtriebselementes (101, 102) angeordnet ist.

2. Kupplung nach Anspruch 1, dadurch gekennzeichnet, daß das Abtriebselement eine Scheibe (11) mit im wesentlichen radial verlaufenden Nuten (17) als radialen Führungen ist oder daß das Abtriebselement eine Welle (130) mit radial abstehenden Armen (131) ist, deren Axialflächen als radiale Führungen ausgebildet sind, wobei die jeweiligen vorstehenden Klemmkörperzapfen oder die mit den Klemmkörpern verbundenen Elemente beim Durchlaufen des Lastbogenweges drehmomentübertragend auf die Arme (131) wirken und beim Durchlaufen des lastfreien Weges über Mitnehmerverbindungen, vorzugsweise einen Draht oder einen elastischen Ring, vom nächstliegenden Arm der Welle mitgenommen werden.

3. Kupplung nach einem der Ansprüche 1 oder 2, dadurch gekennzeichnet, daß die ringförmige Führung des Antriebselementes aus einer Ringnut besteht, in der die Klemmelemente bewegbar oder sperrbar angeordnet sind, oder durch einen Ringkörper gebildet wird, der von Klemmelementen gleitend ober abrollend umfaßt oder durch Verschwenken reibschlüssig umgriffen wird.

4. Kupplung nach einem der Ansprüche 1 bis 3, dadurch gekennzeichnet, daß der Klemmkörper (110) einen vertikal zur Ringnutmantelfläche stehenden Zapfen (113) aufweist, an dessen dem Klemmkörper (110) abgewandten Ende ein Klemmkörperzapfen mit einer parallel zur Ringnut liegenden Längsachse angeordnet ist, dessen Enden (111) in jeweiligen radialen Führungen (103, 104) eines zweiteilig ausgebildeten Abtriebselementes (101, 102) abgeordnet sind, wobei die beiden scheibenförmig (101, 102) oder als Welle (130) mit radial abstehenden Armen (131) ausgebildeten Teile des Abtriebselementes beidseitig des Antriebselementes (11, 120) angeordnet und miteinander verbunden sind.

5. Kupplung nach einem der Ansprüche 1 bis 4, dadurch gekennzeichnet, daß die Klemmelemente (13, 14, 112) in Ringnuten (12) um eine Drehachse bewegt werden, die parallel oder vertikal zu ihrer Schwenkachse (S) liegt, um die die Klemmelemente (13, 14, 110) beim Übergang vom drehmomentfreien zum drehmomentübertragenden Weg kippbar sind, wobei vorzugsweise die Nuten (17) in Radialrichtung der Scheibe (11) gekrümmt ausgebildet sind und/oder der Klemmkörperzapfen im Querschnitt unrund ausgeführt ist.

6. Kupplung nach einem der Ansprüche 1 bis 5, dadurch gekennzeichnet, daß das exzentrisch verstellbare Abtriebselement einen radial beweglichen Schlitten (44) aufweist, der mit einem oder mehreren Klemmkörpern (13, 14) oder einem mit dem oder den Klemmkörpern verbundenen Körper jeweils drehstarr verbunden ist und/oder daß der Kontaktkörper aus einer oder mehreren Rollen (61, 62; 64 bis 67) besteht, die beim Verriegeln und/oder beim Überholen eine Wälzbewegung in der Führung (12) ausführen oder daß mindestens eine Feder (63; 88, 89) vorgesehenist, die mittelbar oder unmittelbar auf den Kontaktkörper (61, 62; 64, 65; 73, 74) einwirkt und deren Direktionskraft die Anlage der Kontaktkörper an den Nutwandungen bewirkt, wobei die Feder (63) oder hiermit zur Verriegelung verbundene Elemente, vorzugsweise Rollen oder Kugeln auf Flächen einer weiteren Ringnut (70), die im Boden der Ringnut (12) angeordnet ist, abgestützt werden.

7. Kupplung nach einem der Ansprüche 1 bis 6, dadurch gekennzeichnet, daß durch die Lage und Ausgestaltung der Kontaktkörper relativ zum Grundkörper beim Umschalten von der Freilaufstellung in die drehmomentübertragende Stellung im wesentlichen eine Wälzbewegung ausführbar ist, wobei vorzugsweise die gegenseitigen Flächen der Kontaktkörper (210, 211) und der Grundkörper, die in der drehmomentübertragenden Stellung zur Anlage kommen, teilkreisförmig sind, wobei zwischen den Kontaktkörpern und der Ringnut (201) im Sperrzustand ein im wesentlichen vollflächiger Kontakt entsteht und/oder daß der Grundkörper aus zwei Teilen (71, 72) besteht, die berührend mit ihren gegenseitigen Mantelflächen aneinanderliegen, die konvex ausgebildet sind, vorzugsweise im Querschnitt die Form einer logarithmischen Spirale aufweisen.

8. Kupplung nach einem der Ansprüche 1 bis 7, dadurch gekennzeichnet, daß die Kontaktkörper (61, 62; 64, 65; 73, 74) einen unrunden Querschnitt aufweisen, wobei ein Flächenabschnitt der Kontaktkörper mit seinem Krümmungsradius etwa der Flächenkrümmung der Ringnutwandung (201) angepaßt ist, mit der die genannten Flächenabschnitte der Kontaktkörper in der drehmomentübertragenden Stellung eine reibschlüssige flächige Anlage bilden, so daß die Hertz'sche Pressung minimiert wird, wobei das Verhältnis der Radien zwischen 0,6 und 1,4, vorzugsweise zwischen 0,8 und 1,2, liegt.

9. Richtungsgeschaltete Kupplung mit einem Antriebs- und einem Abtriebselement, zwischen denen Klemmelemente, wie Klemmkörper, Klemmrollen oder Sperrklinken angeordnet sind, die selbst oder die über mit diesen verbundenen Körpern sowohl in der Freilaufstellung als auch in der drehmomentübertragenden Stellung in bezug auf die Drehrichtung des Abtriebselementes mit diesem drehunbeweglich verbunden sind und die in der Freilaufstellung in einer ringförmigen Führung des Antriebselementes bewegt und in der drehmomentübertragenden Stellung in dieser Führung gesperrt werden, dadurch gekennzeichnet, daß das Abtriebs- und das Antriebselement jeweils zweischnittig ausgebildet sind, d.h., jeweils zwei axial versetzte Teile aufweisen, wobei das Antriebs- oder das Abtriebselement aus zwei axial zueinander versetzten Scheiben (223) mit Bohrungen (224) ausgebildet ist, in die jeweils ein vorstehender Klemmkörperzapfen (218) oder ein mit dem Klemmkörperzapfen verbundenes Element eingreift, wodurch eine Tangentialkraft und damit ein Drehmoment zwischen dem Zapfen (218) und den Scheiben (223) übertragbar ist und wodurch bei im wesentlichen spiegelsymmetrischer Anordnung des Antriebs- und des Abtriebselementes eine im wesentlichen homogene Spannungsverteilung erzeugbar ist.

10. Kupplung nach Anspruch 9, dadurch gekennzeichnet, daß die Klemmelemente aus einem ein- oder mehrteiligen Grundkörper und aus einem mehrteiligen Kontaktkörper (210, 211) bestehen, der in der drehmomentübertragenden Stellung in der Führung des Antriebselementes sperrend anliegt, wobei die Klemmflächen der Kontaktkörper (210, 211) teilkreisförmig ausgebildet sind, so daß in der Kontaktzone zur Ringscheibe (200) im wesentlichen eine Flächenberührung entsteht, wobei die Hertz'sche Pressung durch angepaßte Radien der sich berührenden Flächen der Ringscheibe (200) und der Kontaktkörpr 210, 211) minimiert wird, vorzugsweise dergestalt, daß das Verhältnis des Radius der Klemmkörperflächen und des Radius der Ringscheibe, die im drehmomentübertragenden Sperrzustand reibschlüssig aneinanderliegen, zwischen 0,6 und 1,4, vorzugsweise zwischen 0,8 und 1,2, liegt.

## Claims

1. Direction-controlled clutch with a drive element (10, 120) and an output element (11; 101, 102; 130, 131) between which coupling elements (13, 14, 110) are arranged that themselves or together with bodies connected to them both in the free-running position as in the torque-transmitting position are connected in the rotation direction of the output element (11; 101, 102; 130, 131) with same and which in the free-running position move in an annular guide of the input element (10, 120) and in the torque-transmitting position are wedged on this guide (12), whereby the output element (11; 101, 102; 130, 131) has radial guides (17; 103, 104) in each of which a projecting coupling-body pin (15, 16; 111) or an element connected with the coupling body is radially guided and that the output element (11; 101, 102; 130, 131) is moveable eccentric to the drive element (10, 120), the coupling elements (13, 14, 110) when eccentric moving cyclically through a torque-transmitting load path and a load-free path and when moving from the load-free path to the arcuate load path the applied torque is transmitted from the drive element by force and/or structural engagement, whereby the coupling elements (110) are so guided and shaped that there is only one degree of freedom necessary to pivot from the load-free path to the torque-transmitting path
**characterized in that**
the coupling elements (13) are comprised of a single- or multiple-part base (60, 66, 71, 72) and of a single- or multiple-part contact body (61, 62; 64, 65; 73, 74) which wedge in the torque-transmitting position in the guide (12) of the input element (10) and that the projecting coupling-body pin or an element connected with the coupling body has two parts engaged in radial guides (103, 104) of the output element (101, 102).

2. Clutch according to claim 1, characterized in that the output element is a disk (11) with generally radially extending grooves (17) as radial guides or that the output element is a shaft (130) with radially projecting arms (131) whose axial surfaces are formed as radial guides whereby the respective projecting coupling-body pins or the elements connected with the coupling bodies when passing through the arcuate load path transmit torque to the arms (131) and when passing through the load-free path are entrained by dog connections, preferably a wire or an elastic ring, from the closest arm of the shaft.

3. The transmission according to one of claims 1 or 2, characterized in that the annular guide of the drive element is comprised of an annular groove in which the coupling element can slide or wedge or of a ring body that is gripped by slidable or wedgeable coupling elements or that is gripped frictionally by pivoting.

4. Clutch according to one of the claims 1 to 3, characterized in that the coupling body (110) has a pin (113) projecting perpendicular from the surface of the annular groove and on whose end turned away from the coupling body (110) a coupling-body pin (114) with a longitudinal axis parallel to the annular groove is arranged and whose ends (111) fit in respective radial guides (103, 104) of a two part output element (101, 102), whereby the two disks (101, 102) of the output element or the shaft (130) with parts formed as radially projecting arms (131) being connected together and arranged to both sides of the input element (11, 120).

5. Clutch according to one of claims 1 to 4, characterized in that the coupling elements (13, 14, 112) are moved in annular grooves (12) around a rotation axis that is parallel or perpendicular to their pivot axis (S), about which the coupling elements (13, 14, 110) are pivoted when moving from the torque-transmitting to the torque-free path, whereby preferably the grooves (17) of the disk (11) are curved radially and/or the coupling-body pins are nonround in cross section.

6. Clutch according to one of the claims 1 to 5, characterized in that the eccentrically movable output element has a radially movable slide (44) which is rotationally connected with one or more coupling bodies (13, 14) or with a body or with bodies connected to the coupling body and/or that the contact body is comprised of one or more rollers (61, 62; 64 to 67) which when wedged or passed roll in the guide (12) or that at least one spring (63; 88, 89) is provided which bears directly or indirectly on the contact body (61, 62; 64, 65; 73, 74) in a direction pressing the contact body on the groove wall, whereby the spring (63) or wedging elements connected hereto, preferably rollers or balls, are braced on surfaces of a further annular groove (70) that is formed in a floor of the annular groove (12).

7. Clutch according to one of claims 1 to 6, characterized in that the position and shape of the contact bodies relative to the base body is generally employed to move the roller on moving from the free-running position into the torque-transmitting position, whereby preferably the opposite surfaces of the contact bodies (210, 211) and of the base body that engage in the torque-transmitting position are part circular, whereby a surface contact primarily being formed in the wedging position between the contact bodies and the annular groove (201) and/or that the base body is formed of two parts (71, 72) that engage each other with opposite surfaces that are convex, preferably formed as a logarithmic spiral in a cross-sectional view.

8. Clutch according to one of claims 1 to 7, characterized in that the contact body (61, 62; 64, 65; 73, 74) has a nonround cross section, whereby a surface portion of the contact body corresponding generally to the surface arc of the annular-groove wall (201) with which this surface portion forms a frictional surface contact in the torque-transmitting position so that the Hertzian pressure is minimized, whereby the relationship of the radii lying between 0,6 and 1,4, preferably between 0,8 and 1,2.

9. Direction-controlled clutch with a drive element and an output element between which coupling elements such as coupling bodies, coupling rollers or coupling pawls are arranged that themselves or together with bodies connected to them both in the free-running position as in the torque-transmitting position are connected in the rotation direction of the output element with same and which in the free-running position move in an annular guide of the input element and in the torque-transmitting position are wedged on this guide, characterized in that the output and the drive element are each formed as two parts, that is each with two axially offset parts, whereby the drive or the output element being formed of two axially offset disks (223) with bores (224) in each of which engages a projecting coupling-body pin (218) or an element connected therewith such that a tangential force an thus torque can be transmitted between the pin (218) and the disk (223) and so that with a generally mirror-symmetrical arrangement of the drive and the output element a generally homogeneous stress distribution is obtained.

10. Clutch according to claim 9, characterized in that the coupling elements are comprised of a single- or multiple-part base body and of a multiple-part contact body (210, 211) which wedge in the torque-transmitting position in the guide of the drive element, whereby the coupling surface of the contact bodies (210, 211) are part circular so that surface contact is produced generally in the contact zone with the ring disk (200), whereby the Hertzian pressure being minimized by matching radii of the contacting surfaces of the ring disk (200) and the contact bodies (210, 211), preferably such that the ratio of the radius of the contact-body surfaces and the radius of the ring disk that engage each other frictionally in the torque-transmitting position lies between 0,6 and 1,4, preferably between 0,8 and 1,2.

## Revendications

1. Accouplement unidirectionnel avec un élément moteur (10, 120) et un élément de sortie (11; 101, 102; 130, 131) entre lesquels sont disposés des éléments de serrage (13, 14, 110) qui, eux mêmes ou par l'intermédiaire de corps reliés à eux, aussi bien dans la position de course libre que dans la position transmettant le couple, sont reliés à l'élément de sortie (11; 101, 102; 130, 131) d'une manière immobile en rotation par rapport au sens de rotation de ce dernier, et qui sont déplacés dans un guidage annulaire de l'élément moteur (10, 120) dans la position de course libre et sont bloqués dans ce guidage (12) dans la position transmettant le couple, l'élément de sortie (11; 101, 102; 130, 131) présentant des guidages radiaux (17; 103, 104) dans lesquels respectivement un tenon en saillie (15, 16; 111) du coprs de serrage ou un élément relié au corps de serrage est disposé à guidage radial, et l'élément de sortie (11; 101, 102; 130, 131) pouvant être réglé de façon excentrique par rapport à l'élément moteur (10, 120), les éléments de serrage (13, 14, 110) - dans un réglage excentrique - parcourant de façon cyclique un chemin de charge transmettant le couple et un chemin exempt de charge, et transmettant - lors de la transition du chemin exempt de charge au chemin de l'arc de charge - le couple appliqué par une prise par adhérence et/ou à engagement positif avec l'élément moteur, les éléments de serrage (110) étant guidés et realisés de telle manière qu'il reste seulement un degré de liberté nécessaire à son pivotement lors de la transition du chemin exempt de charge au chemin transmettant le couple,
**caractérisé par le fait**
que les éléments de serrage (13) se composent d'un corps de base à une ou à plusieurs parties (60, 66, 71, 72) et d'un corps de contact à une ou à plusieurs parties (61, 62; 64, 65; 73, 74) qui, dans la position transmettant le couple, s'applique d'une manière bloquante dans le guidage (12) de l'élément moteur (10), et que le tenon en saillie du corps de serrage ou un élément relié au corps de serrage est disposé à deux coupes, c'est-à-dire de manière à présenter respectivement deux parties axialement décalées, dans des guidages radiaux (103, 104) de l'élément de sortie (101, 102).

2. Accouplement selon la revendication 1, caractérisé par le fait que l'élément de sortie est un disque (11) avec des rainures (17) en tant que guidages radiaux, qui s'étendent pour l'essentiel de façon radiale, ou que l'élément de sortie est un arbre (130) avec des bras (131) en saillie radiale dont les surfaces axiales sont réalisées comme guidages radiaux, les tenons en saillie respectifs des corps de serrage ou les éléments reliés aux corps de serrage agissant, lors du passage du chemin de l'arc de charge, sur les bras (131) de manière à transmettre le couple et étant entraînés, lors du passage du chemin exempt de charge, via des connexions à entraînement, de préférence un fil ou un anneau élastique, par le bras de l'arbre, qui est situé le plus proche.

3. Accouplement selon l'une des revendications 1 ou 2, caractérisé par le fait que le guidage annulaire de l'élément moteur se compose d'une rainure annulaire dans laquelle les éléments de serrage sont disposés de manière à pouvoir être déplacés ou bloqués, ou qu'il est formé par un coprs annulaire qui est embrassé à glissement ou à roulement par des éléments de serrage ou embrassé à friction par un pivotement.

4. Accouplement selon l'une des revendications 1 à 3, caractérisé par le fait que le corps de serrage (110) présente un tenon (113) qui est placé verticalement à la surface latérale de la rainure annulaire et à l'extrémité duquel, qui montre dans la direction opposée au corps de serrage (110), est disposé un tenon de corps de serrage avec un axe longitudinal situé parallèlement à la rainure annulaire, les extrémités (111) dudit corps de serrage étant disposées dans des guidages radiaux respectifs (103, 104) d'un élément de sortie réalisé à deux parties (101, 102), les deux parties de l'élément de sortie réalisées en forme de disque (101, 102) ou comme arbre (130) avec des bras en saillie radiale (131) étant disposées de part et d'autre de l'élément moteur (11, 120) et étant reliées entre elles.

5. Accouplement selon l'une des revendications 1 à 4, caractérisé par le fait que les éléments de serrage (13, 14, 112) sont déplacés dans des rainures annulaires (12) autour d'un axe de rotation qui est situé parallèlement ou verticalement à leur axe de pivotement (S) autour duquel les éléments de serrage (13, 14, 110) peuvent basculer lors de la transition du chemin exempt de couple au chemin transmettant le couple, de préférence, les rainures (17) étant réalisées de façon courbée dans la direction radiale du disque (11) et/ou le tenon du corps de serrage étant non rond en coupe transversale.

6. Accouplement selon l'une des revendications 1 à 5, caractérisé par le fait que l'élément de sortie réglable de façon excentrique présente un glissoir (44) qui peut être déplacé radialement et qui, respectivement, est relié d'une manière immobile en rotation relative avec un ou plusieurs corps de serrage (13, 14) ou avec un corps relié au ou aux corps de serrage, et/ou que le corps de contact se compose d'un ou de plusieurs rouleaux (61, 62; 64 à 67) qui, lors du verrouillage et/ou lors du dépassement, exercent un roulement sans glissement dans le guidage (12), ou que du moins un ressort (63; 88, 89) est prévu qui agit directement ou indirectement sur le corps de contact (61, 62; 64, 65; 73, 74) et dont la force de direction provoque l'appui des corps de contact sur les parois de rainure, le ressort (63) ou des éléments reliés à celui-ci pour le verrouillage, de préférence des rouleaux ou billes, étant appuyés sur des surfaces d'une autre rainure annulaire (70) qui est disposée dans le fond de la rainure annulaire (12).

7. Accouplement selon l'une des revendications 1 à 6, caractérisé par le fait que, en raison de la position et de la réalisation des corps de contact relative au corps de base, il est possible d'exercer pour l'essentiel un roulement sans glissement lors de la commutation de la position de course libre à la position transmettant le couple, de préférence, les surfaces réciproques des corps de contact (210, 211) et des corps de base, qui viennent en appui dans la position transmettant le couple, présentant la forme de cercle partiel, un contact pour l'essentiel sur toute la surface étant produit entre les corps de contact et la rainure annulaire (201) en état bloqué, et/ou que le corps de base se compose de deux parties (71, 72) qui s'appliquent à contact l'une contre l'autre avec leurs surfaces latérales réciproques qui sont réalisées de façon convexe, de préférence, en coupe transversale, elles présentent la forme d'une spirale logarithmique.

8. Accouplement selon l'une des revendications 1 à 7, caractérisé par le fait que les corps de contact (61, 62; 64, 65; 73, 74) présentent une section non ronde, une section de surface des corps de contact étant adaptée, avec son rayon de courbure, à peu près à la courbure de surface de la paroi de la rainure annulaire (201), avec laquelle les sections de surface mentionnées des corps de contact forment un appui de surface par friction dans la position transmettant le couple, de sorte que la pression hertzienne est minimisée, le rapport des rayons étant compris entre 0,6 et 1,4, de préférence entre 0,8 et 1,2.

9. Accouplement unidirectionnel avec un élément moteur et un élément de sortie entre lesquels sont disposés des éléments de serrage tels que corps de serrage, rouleaux de serrage ou cliquets d'arrêt, qui, eux mêmes ou par l'intermédiaire de corps reliés à eux, aussi bien dans la position de course libre que dans la position transmettant le couple, sont reliés à l'élément de sortie d'une manière immobile en rotation par rapport au sens de rotation de ce dernier, et qui sont déplacés dans un guidage annulaire de l'élément moteur dans la position de course libre et sont bloqués dans ce guidage dans la position transmettant le couple, caractérisé par le fait que l'élément de sortie et l'élément moteur sont réalisés respectivement à deux coupes, c'est-à-dire ils présentent respectivement deux parties axialement décalées, l'élément moteur ou l'élément de sortie étant réalisé de deux disques (223) pourvus de perçages, qui sont décalés axialement l'un par rapport à l'autre et dans lesquels se prend respectivement un tenon en saillie (218) du corps de serrage ou un élément relié au tenon du corps de serrage, de sorte qu'une force tangentielle et ainsi un couple peut être transmis entre le tenon (218) et les disques (223) et que, avec une disposition pour l'essentiel à symmétrie spéculaire de l'élément moteur et de l'élément de sortie, une répartition pour l'essentiel homogène de la contrainte peut être produite.

10. Accouplement selon la revendication 9, caractérisé par le fait que les éléments de serrge se composent d'un corps de base à une ou à plusieurs parties et d'un corps de contact à plusieurs parties (210, 211) qui, dans la position transmettant le couple, s'applique d'une manière bloquante dans le guidage de l'élément moteur, les surfaces de serrage des corps de contact (210, 211) présentant la forme de cercle partiel de sorte que, pour l'essentiel, un contact de surface est produit dans la zone de contact avec le disque annulaire (200), la pression hertzienne étant minimisée par des rayons adaptés des surfaces en contact du disque annulaire (200) et des corps de contact (210, 211), de préférence de telle façon que le rapport du rayon des surfaces des corps de serrage et du rayon du disque annulaire qui, en état de blocage transmettant le couple, s'appliquent l'un contre l'autre par friction, est compris entre 0,6 et 1,4, de préférence entre 0,8 et 1,2.
